# EUROPEAN PATENT APPLICATION

(11) **EP 4 604 597 A1**
(43) Date of publication of application: **20.08.2025**
(21) Application number: 23893559.7
(22) Date of filing: 30.10.2023
(51) Int. Cl.: H04W 24/02

(54) **COMMUNICATION METHOD AND APPARATUS, AND COMPUTER-READABLE STORAGE MEDIUM**

(30) Priority: 26.11.2022 CN 202211495298
(71) Applicant: Huawei Technologies Co., Ltd., Shenzhen, Guangdong 518129 (CN)
(72) Inventor: RUAN, Wei, Shenzhen, Guangdong 518129 (CN); MA, Yunsi, Shenzhen, Guangdong 518129 (CN)
(74) Representative: Pfenning, Meinig & Partner mbB
(86) International application number: PCT/CN2023/127900
(87) International publication number: WO 2024/109468

(57) **Abstract**

This application relates to the communication field, and in particular, to a communication method and apparatus, and a computer-readable storage medium, and is applicable to a sensing sensing system, and further applicable to a system that complies with the IEEE 802.11 system standards, for example, 802.11bf, 802.11a/b/g, 802.11n, 802.11ac, 802.11ax, or a next-generation standard thereof, for example, 802.11be or a further next-generation standard, a wireless personal local area network system based on ultra-wideband UWB, or the like. This application provides the communication method and apparatus. The method includes: A first device establishes a wireless communication link with a second device, where the first device operates in a first operating mode. The first device switches from the first operating mode to a second operating mode, and communicates with the second device. According to the method in embodiments of this application, service transmission efficiency can be improved.

## Description

This application claims priority to Chinese Patent Application No. 202211495298.9, filed with the China National Intellectual Property Administration on November 26, 2022 and entitled "COMMUNICATION METHOD AND APPARATUS, AND COMPUTER-READABLE STORAGE MEDIUM", which is incorporated herein by reference in its entirety.

### TECHNICAL FIELD

This application relates to the field of wireless communication technologies, and in particular, to a communication method and apparatus, and a computer-readable storage medium.

### BACKGROUND

An operating mode indication (operating mode indication, OMI) mechanism is introduced into the 802.11ax standard to improve flexibility of a wireless fidelity (wireless fidelity, Wi-Fi) device. In the OMI mechanism, a STA is an OMI initiator, and an access point (access point, AP) is an OMI responder. The STA may send, to the AP, a data frame or a control frame that includes an operating mode (operating mode, OM) control field, so that the STA dynamically switches a single-user/multi-user operating mode, a channel bandwidth, a maximum receiver number of spatial streams, and the like. In the conventional OMI mechanism, only the STA is supported to initiate OM negotiation. As a result, flexibility of operating mode switching is poor and service transmission efficiency is low. Therefore, how to improve service transmission efficiency is an urgent problem to be resolved.

### SUMMARY

Embodiments of this application provide a communication method and apparatus, and a computer-readable storage medium, to improve service transmission efficiency.

According to a first aspect, an embodiment of this application provides a communication method. The communication method is applicable to a first device, a module (for example, a chip or a processor) in the first device, or a logical module or software that can implement all or some functions of the first device. The following provides descriptions by using an example in which an execution body is the first device. The communication method includes: The first device establishes a wireless communication link with a second device, where the first device operates in a first operating mode. The first device switches from the first operating mode to a second operating mode, and communicates with the second device.

In solutions provided in this application, the first device may switch from the first operating mode to the second operating mode, and communicate with the second device. Service transmission efficiency can be improved through operating mode switching of the first device.

In a possible implementation, when a first condition is met, the first device switches from the first operating mode to the second operating mode, and the first condition includes one or more of the following: the first device changes from a listening state to a data transmission state; or an amount of data to be transmitted between the first device and the second device changes from less than or equal to a first threshold to greater than the first threshold.

In solutions provided in this application, when the first device changes from the listening state to the data transmission state, or the amount of data to be transmitted between the first device and the second device changes from less than or equal to the first threshold to greater than the first threshold, the first device may switch from the first operating mode to the second operating mode, thereby improving the service transmission efficiency.

In a possible implementation, the first operating mode corresponds to a first bandwidth, and the second operating mode corresponds to a second bandwidth.

In solutions provided in this application, different operating modes may correspond to different bandwidths.

In a possible implementation, the second device operates in a third operating mode, and the third operating mode corresponds to a third bandwidth.

In a possible implementation, the first bandwidth is less than or equal to the third bandwidth, and the second bandwidth is less than or equal to the third bandwidth.

In a possible implementation, that the first device switches from the first operating mode to the second operating mode includes: The first device generates a first frame, where the first frame includes a first field, and the first field includes an operating mode parameter. The first device sends the first frame to the second device. The first device switches from the first operating mode to the second operating mode.

In solutions provided in this application, the first device may generate and send, to the second device, the first frame including the operating mode parameter, so that the first device actively initiates operating mode negotiation, or responds, based on the first frame, to operating mode negotiation initiated by the second device, thereby improving flexibility of operating mode switching and improving the service transmission efficiency.

In a possible implementation, the first field includes an operating mode switch duration indication.

In a possible implementation, the first field further includes a signal bandwidth.

In a possible implementation, the communication method further includes: The first device receives a second frame from the second device, where the second frame includes a second field, the second frame is for initiating operating mode negotiation, and the second field is for recommending an operating mode parameter.

In solutions provided in this application, the second device may actively initiate OM negotiation to the first device. For example, the second device may actively initiate OM negotiation to the first device based on information such as an amount of to-be-transmitted data of a service of the second device, a latency requirement, and a channel state, thereby improving flexibility of operating mode switching negotiation. In addition, when the second device initiates downlink data transmission, the first device may not sense an amount of data transmitted at the second device, and the first device may only respond to the second frame from the second device, and implement operating mode switching, thereby improving timeliness of operating mode switching of the first device and reducing latency of operating mode switching.

In a possible implementation, the second field includes an operating mode recommendation indication and/or an operating mode negotiate indication.

In a possible implementation, the method further includes: The first device sends a seventh frame to the second device before a current transmission opportunity (transmission opportunity, TXOP), where the seventh frame indicates switch time for the first device to switch from the first operating mode to the second operating mode. The first device receives an eighth frame from the second device, where the eighth frame is for responding to the seventh frame.

In solutions provided in this application, the first device may negotiate, based on the seventh frame and the eighth frame before the TXOP, switch time for the first device to switch from the first operating mode to the second operating mode. In this scenario, after completing operating mode switching, the first device may not send a third frame indicating that switching is completed, thereby reducing signaling overheads and improving data transmission efficiency within the TXOP.

In a possible implementation, the method further includes: The first device receives a fifth frame from the second device, where the fifth frame is for requesting the second device to transmit data to the first device.

In a possible implementation, that the first device sends the first frame to the second device includes:

The first device estimates, based on TXOP duration in the fifth frame, an amount of data to be transmitted at the second device. When the amount of data to be transmitted at the second device is greater than or equal to a fourth threshold, the first device sends the first frame to the second device within a current TXOP.

In solutions provided in this application, after receiving the fifth frame from the second device, the first device may estimate, based on the fifth frame, the amount of data to be transmitted at the second device, to independently determine whether to initiate OM negotiation. The first device may actively initiate OM negotiation to the second device, and implement operating mode switching, thereby improving the flexibility of operating mode switching negotiation, improving the timeliness of operating mode switching of the first device, and reducing the latency of operating mode switching.

In a possible implementation, that the first device sends the first frame to the second device includes:
when time in a TXOP duration indication in the fifth frame exceeds a preset threshold, the first device sends the first frame to the second device within the current TXOP.

In solutions provided in this application, the first device may actively initiate OM negotiation to the second device within a TXOP, and implement operating mode switching, thereby improving the timeliness of operating mode switching of the first device, and reducing the latency of operating mode switching.

In a possible implementation, the method further includes: The first device sends a sixth frame to the second device, where the sixth frame is for responding to the second frame.

In solutions provided in this application, after receiving the second frame from the second device, and completing operating mode switching based on the second frame, the first device may send the sixth frame, for example, a CTS frame, to the second device to request the second device to transmit data to the first device, thereby implementing efficient service transmission.

In a possible implementation, the method further includes: The first device receives a ninth frame from the second device, where the ninth frame is used by the second device to transmit data to one or more first devices. The first device sends a tenth frame to the second device, where the tenth frame is for responding to the ninth frame.

In solutions provided in this application, in a multi-user scenario, the first device or the second device may actively initiate operating mode negotiation, and implement operating mode switching, thereby improving the flexibility of operating mode switching negotiation, improving the timeliness of operating mode switching of the first device, and reducing the latency of operating mode switching.

In a possible implementation, the method further includes: When the first device switches from the first operating mode to the second operating mode, the first device receives data from the second device.

In solutions provided in this application, during mode switching of the first device, the first device and the second device receive/send data, to improve air interface utilization, and prevent another user from preempting a channel due to long switch time.

In a possible implementation, the communication method further includes: The first device sends a third frame to the second device, where the third frame indicates that operating mode switching is completed.

In solutions provided in this application, after completing operating mode switching, the first device may send the third frame, for example, an OMI ACK frame, to the second device to indicate that operating mode switching is completed, to implement efficient and reliable service transmission, resolve a problem that the first device cannot notify the second device of a switching state or switching completion time of a current operating mode, and prevent a throughput decrease and a transmission latency increase due to frequent data packet retransmission, a packet loss, or the like caused by the second device delivering data in advance.

In a possible implementation, that the first device sends the third frame to the second device includes: When the operating mode switch duration indication in the first field is a first value, the first device sends the third frame to the second device after completing operating mode switching.

In solutions provided in this application, for example, when an operating mode switch duration indication subfield included in the first field in the first frame is set to 0, it indicates that the first field does not carry operating mode switch duration of the first device, and after completing operating mode switching, the first device may send the third frame to the second device, to indicate the second device to deliver data, to implement the efficient and reliable service transmission.

In a possible implementation, that the first device sends the third frame to the second device includes: When the operating mode switch duration of the first device is greater than time in the operating mode switch duration indication in the first field, the first device sends the third frame to the second device after completing operating mode switching.

In solutions provided in this application, a first device that does not support fast channel switching has long operating mode switch time, and cannot complete operating mode switching based on time in operating mode switch duration indication in a first field. After completing operating mode switching, the first device may send a third frame to the second device, to indicate that operating mode switching is completed, to indicate the second device to deliver data, to implement the efficient and reliable service transmission.

In a possible implementation, that the first device sends the third frame to the second device includes: The first device selects an original signal bandwidth or a signal bandwidth after switching to send the third frame to the second device.

In solutions provided in this application, the first device may select the original signal bandwidth or the signal bandwidth after switching to send the third frame to the second device, to reduce co-channel interference caused by an uplink signal at the first device to a neighboring user.

In a possible implementation, the first frame is a clear to send (clear to send, CTS) frame or a trigger (trigger) frame.

In a possible implementation, the second frame is a request to send (request to send, RTS) frame or a trigger frame.

In a possible implementation, the third frame is an acknowledge (acknowledge, ACK) frame.

In a possible implementation, the fifth frame is an RTS frame.

In a possible implementation, the communication method further includes: The first device prestores physical (physical, PHY) layer module calibration data in different operating modes. The first device selects corresponding PHY layer module calibration data based on the first field, and configures a PHY layer register.

In solutions provided in this application, the PHY layer module calibration data in different operating modes is prestored, and the PHY layer register is configured based on the operating mode parameter of the first field, to reduce operating mode switch time, and reduce latency.

In a possible implementation, that the first device prestores the PHY layer module calibration data in different operating modes includes: The first device prestores PHY layer calibration data in a first bandwidth operating mode, where the first bandwidth is a bandwidth greater than or equal to the first threshold. The communication method further includes: After channel switching, the first device receives/sends a signal by using a signal bandwidth less than the first bandwidth.

In solutions provided in this application, the first device may prestore the PHY layer module calibration data in the first bandwidth operating mode, thereby reducing implementation complexity.

In a possible implementation, the communication method further includes: The first device receives a fourth frame from the second device, where the fourth frame indicates that the TXOP ends.

In solutions provided in this application, after delivering data to the first device, the second device may send the fourth frame to end the current TXOP in advance, thereby implementing the efficient service transmission.

According to a second aspect, an embodiment of this application provides a communication method. The communication method is applicable to a second device, a module (for example, a chip or a processor) in the second device, or a logical module or software that can implement all or some functions of the second device. The following provides descriptions by using an example in which an execution body is the second device. The communication method includes: The second device establishes a wireless communication link with a first device, where the first device operates in a first operating mode. The second device communicates with the first device based on a second operating mode.

In solutions provided in this application, the first device may switch from the first operating mode to the second operating mode, and communicate with the second device. Service transmission efficiency can be improved through communication between the second device and the first device in an operating mode after switching.

It should be understood that the second aspect may be executed by the second device, and specific content of the second aspect corresponds to the content of the first aspect. For corresponding features of the second aspect and beneficial effect achieved by the second aspect, refer to the descriptions of the first aspect. To avoid repetition, detailed descriptions are properly omitted herein.

In a possible implementation, when a first condition is met, the second device communicates with the first device based on the second operating mode, and the first condition includes one or more of the following: the first device changes from a listening state to a data transmission state; or an amount of data to be transmitted between the first device and the second device changes from less than or equal to a first threshold to greater than the first threshold.

In a possible implementation, the first operating mode corresponds to a first bandwidth, and the second operating mode corresponds to a second bandwidth.

In a possible implementation, the second device operates in a third operating mode, and the third operating mode corresponds to a third bandwidth.

In a possible implementation, the first bandwidth is less than or equal to the third bandwidth, and the second bandwidth is less than or equal to the third bandwidth.

In a possible implementation, the communication method further includes: The second device receives a first frame from the first device, where the first frame includes a first field, and the first field includes an operating mode parameter.

In a possible implementation, the first field includes an operating mode switch duration indication.

In a possible implementation, the first field further includes a signal bandwidth.

In a possible implementation, the communication method further includes: The second device sends a second frame to the first device, where the second frame includes a second field, the second frame is for initiating operating mode negotiation, and the second field is for recommending an operating mode parameter.

In a possible implementation, the second field includes an operating mode recommendation indication and/or an operating mode negotiate indication.

In a possible implementation, that the second device sends the second frame to the first device includes: When an amount of to-be-transmitted data of the second device is greater than or equal to a second threshold, or required transmission time of the to-be-transmitted data is greater than or equal to a third threshold, the second device sends the second frame to the first device.

In solutions provided in this application, the second device may actively initiate OM negotiation to the first device based on information such as an amount of to-be-transmitted data of a service of the second device, a latency requirement, and a channel state, thereby improving flexibility of operating mode switching negotiation. In addition, when the second device initiates downlink data transmission, the first device may not sense an amount of data transmitted at the second device, and the first device may only respond to the second frame from the second device, and implement operating mode switching, thereby improving timeliness of operating mode switching of the first device and reducing latency of operating mode switching.

In a possible implementation, the method further includes: The second device receives a seventh frame from the first device before a current TXOP, where the seventh frame indicates switch time for the first device to switch from the first operating mode to the second operating mode. The second device sends an eighth frame to the first device, where the eighth frame is for responding to the seventh frame.

In a possible implementation, the method further includes: The second device sends a fifth frame to the first device, where the fifth frame is for requesting the second device to transmit data to the first device.

In a possible implementation, the method further includes: The second device sends a sixth frame to the first device, where the sixth frame is for responding to the second frame.

In a possible implementation, the method further includes: The second device sends a ninth frame to the first device, where the ninth frame is used by the second device to transmit data to one or more first devices. The second device receives a tenth frame from the first device, where the tenth frame is for responding to the ninth frame.

In a possible implementation, the method further includes: When the second device receives a first frame from one or more first devices or fails to receive the first frame from the one or more first devices within a preset time, the second device sends data to the one or more first devices.

In solutions provided in this application, in a multi-user scenario, the first device may actively initiate operating mode negotiation by sending the first frame to the second device. When the second device receives a first frame of at least one first device or fails to receive the first frame within a preset time, the second device may still deliver data to the first device based on an original operating mode until the first device completes operating mode switching. The second device may deliver data to the first device based on an operating mode after switching.

In a possible implementation, the method further includes: When the first device switches from the first operating mode to the second operating mode, the second device sends data to the first device.

In a possible implementation, the communication method further includes: The second device receives a third frame from the first device, where the third frame indicates that operating mode switching is completed.

In a possible implementation, the communication method further includes: After receiving the third frame from the first device, the second device delivers data to the first device.

In solutions provided in this application, the second device may determine, based on the received third frame, time for delivering data to the first device, to implement efficient service transmission.

In a possible implementation, the communication method further includes: When the operating mode switch duration indication in the first field is a second value, the second device delivers data to the first device after time in the operating mode switch duration indication.

In solutions provided in this application, the second device may determine, based on the operating mode switch duration indication in the first field, time for delivering data to the first device, to implement the efficient service transmission.

In a possible implementation, the first frame is a CTS frame or a trigger frame.

In a possible implementation, the second frame is an RTS frame or a trigger frame.

In a possible implementation, the third frame is an ACK frame.

In a possible implementation, the fifth frame is an RTS frame.

In a possible implementation, the communication method further includes: The second device sends a fourth frame to the first device, where the fourth frame indicates that the TXOP ends.

According to a third aspect, an embodiment of this application provides a communication method. The communication method is applicable to a first device, a module (for example, a chip or a processor) in the first device, or a logical module or software that can implement all or some functions of the first device. The following provides descriptions by using an example in which an execution body is the first device. The communication method includes: The first device generates a first frame, where the first frame includes a first field, and the first field includes an operating mode parameter. The first device sends the first frame to a second device.

In solutions provided in this application, the first device may generate and send, to the second device, the first frame including the operating mode parameter, so that the first device actively initiates operating mode negotiation, or responds, based on the first frame, to operating mode negotiation initiated by the second device, thereby improving flexibility of operating mode switching.

In a possible implementation, the first field includes an operating mode switch duration indication.

In a possible implementation, the first field further includes a signal bandwidth.

In a possible implementation, the communication method further includes:

The first device receives a second frame from the second device, where the second frame includes a second field, the second frame is for initiating operating mode negotiation, and the second field is for recommending an operating mode parameter.

In solutions provided in this application, the second device may actively initiate OM negotiation to the first device. For example, the second device may actively initiate OM negotiation to the first device based on information such as an amount of to-be-transmitted data of a service of the second device, a latency requirement, and a channel state, thereby improving flexibility of operating mode switching negotiation. In addition, when the second device initiates downlink data transmission, the first device may not sense an amount of data transmitted at the second device, and the first device may only respond to the second frame from the second device, and implement operating mode switching, thereby improving timeliness of operating mode switching of the first device and reducing latency of operating mode switching.

In a possible implementation, the second field includes an operating mode recommendation indication and/or an operating mode negotiate indication.

In a possible implementation, the method further includes:

The first device receives a fifth frame from the second device, where the fifth frame is for requesting the second device to transmit data to the first device.

In a possible implementation, that the first device sends the first frame to the second device includes:

The first device estimates, based on the fifth frame, an amount of data to be transmitted at the second device. When the amount of data to be transmitted at the second device is greater than or equal to a fourth threshold, the first device sends the first frame to the second device within a current transmission opportunity (transmission opportunity, TXOP).

In solutions provided in this application, after receiving the fifth frame from the second device, the first device may estimate, based on the fifth frame, the amount of data to be transmitted at the second device, to independently determine whether to initiate OM negotiation. The first device may actively initiate OM negotiation to the second device, and implement operating mode switching, thereby improving the flexibility of operating mode switching negotiation, improving the timeliness of operating mode switching of the first device, and reducing the latency of operating mode switching.

In a possible implementation, that the first device sends the first frame to the second device includes: When time in a TXOP duration (duration) indication in the fifth frame exceeds a preset threshold, the first device sends the first frame to the second device within the current TXOP.

In solutions provided in this application, the first device may actively initiate OM negotiation to the second device within a TXOP, and implement operating mode switching, thereby improving the timeliness of operating mode switching of the first device, and reducing the latency of operating mode switching.

In a possible implementation, the communication method further includes: The first device sends a third frame to the second device, where the third frame indicates that operating mode switching is completed.

In solutions provided in this application, after completing operating mode switching, the first device may send the third frame, for example, an OMI ACK frame, to the second device to indicate that operating mode switching is completed, to implement efficient and reliable service transmission, resolve a problem that the first device cannot notify the second device of a switching state or switching completion time of a current operating mode, and prevent a throughput decrease and a transmission latency increase due to frequent data packet retransmission, a packet loss, or the like caused by the second device delivering data in advance.

In a possible implementation, that the first device sends the third frame to the second device includes: When the operating mode switch duration indication in the first field is a first value, the first device sends the third frame to the second device after completing operating mode switching.

In solutions provided in this application, for example, when an operating mode switch duration indication subfield included in the first field in the first frame is set to 0, it indicates that the first field does not carry operating mode switch duration of the first device, and after completing operating mode switching, the first device may send the third frame to the second device, to indicate the second device to deliver data, to implement the efficient and reliable service transmission.

In a possible implementation, that the first device sends the third frame to the second device includes: When the operating mode switch duration of the first device is greater than time in the operating mode switch duration indication in the first field, the first device sends the third frame to the second device after completing operating mode switching.

In solutions provided in this application, a first device that does not support fast channel switching has long operating mode switch time, and cannot complete operating mode switching based on time in operating mode switch duration indication in a first field. After completing operating mode switching, the first device may send a third frame to the second device, to indicate that operating mode switching is completed, to indicate the second device to deliver data, to implement the efficient and reliable service transmission.

In a possible implementation, that the first device sends the third frame to the second device includes: The first device selects an original signal bandwidth or a signal bandwidth after switching to send the third frame to the second device.

In solutions provided in this application, the first device may select the original signal bandwidth or the signal bandwidth after switching to send the third frame to the second device, to reduce co-channel interference caused by an uplink signal at the first device to a neighboring user.

In a possible implementation, the first frame is a clear to send (clear to send, CTS) frame or a trigger (trigger) frame.

In a possible implementation, the second frame is a request to send (request to send, RTS) frame or a trigger frame.

In a possible implementation, the third frame is an acknowledge (acknowledge, ACK) frame.

In a possible implementation, the fifth frame is an RTS frame.

In a possible implementation, the communication method further includes: The first device prestores physical (physical, PHY) layer module calibration data in different operating modes. The first device selects corresponding PHY layer module calibration data based on the first field, and configures a PHY layer register.

In solutions provided in this application, the PHY layer module calibration data in different operating modes is prestored, and the PHY layer register is configured based on the operating mode parameter of the first field, to reduce operating mode switch time, and reduce latency.

In a possible implementation, that the first device prestores the PHY layer module calibration data in different operating modes includes: The first device prestores PHY layer calibration data in a first bandwidth operating mode, where the first bandwidth is a bandwidth greater than or equal to the first threshold. The communication method further includes: After channel switching, the first device receives/sends a signal by using a signal bandwidth less than the first bandwidth.

In solutions provided in this application, the first device may prestore the PHY layer module calibration data in the first bandwidth operating mode, thereby reducing implementation complexity.

In a possible implementation, the communication method further includes: The first device receives a fourth frame from the second device, where the fourth frame indicates that the TXOP ends.

In solutions provided in this application, after delivering data to the first device, the second device may send the fourth frame to end the current TXOP in advance, thereby implementing the efficient service transmission.

According to a fourth aspect, an embodiment of this application provides a communication method. The communication method is applicable to a second device, a module (for example, a chip or a processor) in the second device, or a logical module or software that can implement all or some functions of the second device. The following provides descriptions by using an example in which an execution body is the second device. The communication method includes: The second device receives a first frame from a first device, where the first frame includes a first field, and the first field includes an operating mode parameter.

In solutions provided in this application, the second device may receive the first frame including the operating mode parameter from the first device, so that the first device actively initiates operating mode negotiation, or responds, based on the first frame, to operating mode negotiation initiated by the second device, thereby improving flexibility of operating mode switching.

It should be understood that the fourth aspect may be executed by the second device, and specific content of the second aspect corresponds to the content of the third aspect. For corresponding features of the fourth aspect and beneficial effect achieved by the fourth aspect, refer to the descriptions of the third aspect. To avoid repetition, detailed descriptions are properly omitted herein.

In a possible implementation, the first field includes an operating mode switch duration indication.

In a possible implementation, the first field further includes a signal bandwidth.

In a possible implementation, the communication method further includes:

The second device generates a second frame, where the second frame includes a second field, the second frame is for initiating operating mode negotiation, and the second field is for recommending an operating mode parameter.

The second device sends the second frame to the first device.

In a possible implementation, the second field includes an operating mode recommendation indication and/or an operating mode negotiate indication.

In a possible implementation, that the second device sends the second frame to the first device includes:

When an amount of to-be-transmitted data of the second device is greater than or equal to a second threshold, or required transmission time of the to-be-transmitted data is greater than or equal to a third threshold, the second device sends the second frame to the first device.

In solutions provided in this application, the second device may actively initiate OM negotiation to the first device based on information such as an amount of to-be-transmitted data of a service of the second device, a latency requirement, and a channel state, thereby improving flexibility of operating mode switching negotiation. In addition, when the second device initiates downlink data transmission, the first device may not sense an amount of data transmitted at the second device, and the first device may only respond to the second frame from the second device, and implement operating mode switching, thereby improving timeliness of operating mode switching of the first device and reducing latency of operating mode switching.

In a possible implementation, the method further includes:

The second device sends a fifth frame to the first device, where the fifth frame is for requesting the second device to transmit data to the first device.

In a possible implementation, the communication method further includes:

The second device receives a third frame from the first device, where the third frame indicates that operating mode switching is completed.

In a possible implementation, the communication method further includes: After receiving the third frame from the first device, the second device delivers data to the first device.

In solutions provided in this application, the second device may determine, based on the received third frame, time for delivering data to the first device, to implement efficient service transmission.

In a possible implementation, the communication method further includes: When the operating mode switch duration indication in the first field is a second value, the second device delivers data to the first device after time in the operating mode switch duration indication.

In solutions provided in this application, the second device may determine, based on the operating mode switch duration indication in the first field, time for delivering data to the first device, to implement the efficient service transmission.

In a possible implementation, the first frame is a CTS frame or a trigger frame.

In a possible implementation, the second frame is an RTS frame or a trigger frame.

In a possible implementation, the third frame is an ACK frame.

In a possible implementation, the fifth frame is an RTS frame.

In a possible implementation, the communication method further includes: The second device sends a fourth frame to the first device, where the fourth frame indicates that a current TXOP ends.

According to a fifth aspect, an embodiment of this application provides a communication method. The communication method is applicable to a first device, a module (for example, a chip or a processor) in the first device, or a logical module or software that can implement all or some functions of the first device. The following provides descriptions by using an example in which an execution body is the first device. The communication method includes:

The first device receives a second frame from a second device, where the second frame includes a second field, the second frame is for initiating operating mode negotiation, and the second field is for recommending an operating mode parameter.

In this embodiment of this application, the first device may receive the second frame for initiating operating mode negotiation from the second device, so that the second device actively initiates operating mode negotiation, thereby improving flexibility of operating mode switching.

In a possible implementation, the second field includes an operating mode recommendation indication and/or an operating mode negotiate indication.

In a possible implementation, the method further includes: The first device generates a first frame, where the first frame includes a first field, and the first field includes an operating mode parameter. The first device sends the first frame to a second device.

In this embodiment of this application, after receiving the second frame from the second device, the first device may send the first frame to the second device in response to the second frame, that is, in response to the OM negotiation actively initiated by the second device, thereby improving the flexibility of operating mode switching.

In a possible implementation, the first field includes an operating mode switch duration indication.

In a possible implementation, the first field further includes a signal bandwidth.

In a possible implementation, the method further includes:

The first device sends a sixth frame to the second device, where the sixth frame is for responding to the second frame.

In solutions provided in this application, after receiving the second frame from the second device, the first device may send the sixth frame, for example, a CTS frame, to the second device to request the second device to transmit data to the first device, thereby implementing efficient service transmission.

In a possible implementation, the communication method further includes: The first device sends a third frame to the second device, where the third frame indicates that operating mode switching is completed.

In solutions provided in this application, after completing operating mode switching based on the second frame, the first device may send the third frame, for example, an ACK frame, to the second device to indicate that operating mode switching is completed, to implement efficient and reliable service transmission, resolve a problem that the first device cannot notify the second device of a switching state or switching completion time of a current operating mode, and prevent a throughput decrease and a transmission latency increase due to frequent data packet retransmission, a packet loss, or the like caused by the second device delivering data in advance.

In a possible implementation, that the first device sends the third frame to the second device includes: When the operating mode switch duration indication in the first field is a first value, the first device sends the third frame to the second device after completing operating mode switching.

In solutions provided in this application, for example, when an operating mode switch duration indication subfield included in the first field in the first frame is set to 0, it indicates that the first field does not carry operating mode switch duration of the first device, and after completing operating mode switching, the first device may send the third frame to the second device, to indicate the second device to deliver data, to implement the efficient and reliable service transmission.

In a possible implementation, that the first device sends the third frame to the second device includes: When the operating mode switch duration of the first device is greater than time in the operating mode switch duration indication in the first field, the first device sends the third frame to the second device after completing operating mode switching.

In solutions provided in this application, a first device that does not support fast channel switching has long operating mode switch time, and cannot complete operating mode switching based on time in operating mode switch duration indication in a first field. After completing operating mode switching, the first device may send a third frame to the second device, to indicate that operating mode switching is completed, to indicate the second device to deliver data, to implement the efficient and reliable service transmission.

In a possible implementation, that the first device sends the third frame to the second device includes: The first device selects an original signal bandwidth or a signal bandwidth after switching to send the third frame to the second device.

In solutions provided in this application, the first device may select the original signal bandwidth or the signal bandwidth after switching to send the third frame to the second device, to reduce co-channel interference caused by an uplink signal at the first device to a neighboring user.

In a possible implementation, the first frame is a CTS frame or a trigger frame.

In a possible implementation, the second frame is an RTS frame or a trigger frame.

In a possible implementation, the third frame is the ACK frame.

In a possible implementation, the sixth frame is the CTS frame.

In a possible implementation, the communication method further includes: The first device receives a fourth frame from the second device, where the fourth frame indicates that a TXOP ends.

In solutions provided in this application, after delivering data to the first device, the second device may send the fourth frame to end the current TXOP in advance, thereby implementing the efficient service transmission.

According to a sixth aspect, an embodiment of this application provides a communication method. The communication method is applicable to a second device, a module (for example, a chip or a processor) in the second device, or a logical module or software that can implement all or some functions of the second device. The following provides descriptions by using an example in which an execution body is the second device. The communication method includes: The second device generates a second frame, where the second frame includes a second field, the second frame is for initiating operating mode negotiation, and the second field is for recommending an operating mode parameter. The second device sends the second frame to the first device.

In this embodiment of this application, the second device may actively initiate operating mode negotiation to the first device based on the second frame, thereby improving flexibility of operating mode switching negotiation.

It should be understood that the sixth aspect may be executed by the second device, and specific content of the sixth aspect corresponds to the content of the fifth aspect. For corresponding features of the sixth aspect and beneficial effect achieved by the sixth aspect, refer to the descriptions of the fifth aspect. To avoid repetition, detailed descriptions are properly omitted herein.

In a possible implementation, the second field includes an operating mode recommendation indication and/or an operating mode negotiate indication.

In a possible implementation, that the second device sends the second frame to the first device includes:

When an amount of to-be-transmitted data of the second device is greater than or equal to a second threshold, or required transmission time of the to-be-transmitted data is greater than or equal to a third threshold, the second device sends the second frame to the first device.

In solutions provided in this application, the second device may actively initiate OM negotiation to the first device based on information such as an amount of to-be-transmitted data of a service of the second device, a latency requirement, and a channel state, thereby improving flexibility of operating mode switching negotiation. In addition, when the second device initiates downlink data transmission, the first device may not sense an amount of data transmitted at the second device, and the first device may only respond to the second frame from the second device, and implement operating mode switching, thereby improving timeliness of operating mode switching of the first device and reducing latency of operating mode switching.

In a possible implementation, the method further includes:

The second device receives a first frame from the first device, where the first frame includes a first field, and the first field includes an operating mode parameter.

In this embodiment of this application, after receiving the second frame from the second device, the first device may send the first frame to the second device in response to the second frame, that is, in response to the OM negotiation actively initiated by the second device, thereby improving the flexibility of operating mode switching.

In a possible implementation, the first field includes an operating mode switch duration indication.

In a possible implementation, the first field further includes a signal bandwidth.

In a possible implementation, the method further includes:

The second device receives a sixth frame from the first device, where the sixth frame is for responding to the second frame.

In a possible implementation, the communication method further includes:

The second device receives a third frame from the first device, where the third frame indicates that operating mode switching is completed.

In a possible implementation, the communication method further includes: After receiving the third frame from the first device, the second device delivers data to the first device.

In solutions provided in this application, the second device may determine, based on the received third frame, time for delivering data to the first device, to implement efficient service transmission.

In a possible implementation, the communication method further includes: When the operating mode switch duration indication in the first field is a second value, the second device delivers data to the first device after time in the operating mode switch duration indication.

In solutions provided in this application, the second device may determine, based on the operating mode switch duration indication in the first field, time for delivering data to the first device, to implement the efficient service transmission.

In a possible implementation, the communication method further includes: After receiving the sixth frame from the first device, the second device delivers data to the first device.

In a possible implementation, the first frame is a CTS frame or a trigger frame.

In a possible implementation, the second frame is an RTS frame or a trigger frame.

In a possible implementation, the third frame is an ACK frame.

In a possible implementation, the sixth frame is a CTS frame.

In a possible implementation, the communication method further includes: The second device sends a fourth frame to the first device, where the fourth frame indicates that a TXOP ends.

According to a seventh aspect, an embodiment of this application provides a communication apparatus.

The communication apparatus is applicable to a first device, a module (for example, a chip or a processor) in the first device, or a logical module or software that can implement all or some functions of the first device. For beneficial effect, refer to descriptions of the first aspect. Details are not described herein again. The communication apparatus has functions of implementing behavior in the method example in the first aspect. The function may be implemented by hardware, or may be implemented by hardware executing corresponding software. The hardware or the software includes one or more modules corresponding to the foregoing function.

In a possible implementation, the communication apparatus includes:
an establishment unit, configured to establish a wireless communication link with a second device, where the first device operates in a first operating mode;
a switching unit, configured to switch from the first operating mode to a second operating mode; and
a transceiver unit, configured to communicate with the second device.

In a possible implementation, when a first condition is met, the switching unit switches from the first operating mode to the second operating mode, and the first condition includes one or more of the following: the first device changes from a listening state to a data transmission state; or an amount of data to be transmitted between the first device and the second device changes from less than or equal to a first threshold to greater than the first threshold.

In a possible implementation, the first operating mode corresponds to a first bandwidth, and the second operating mode corresponds to a second bandwidth.

In a possible implementation, the second device operates in a third operating mode, and the third operating mode corresponds to a third bandwidth.

In a possible implementation, the first bandwidth is less than or equal to the third bandwidth, and the second bandwidth is less than or equal to the third bandwidth.

In a possible implementation, the switching unit switches from the first operating mode to the second operating mode, and is specifically configured to: generate a first frame, where the first frame includes a first field, and the first field includes an operating mode parameter; send the first frame to the second device; and switch from the first operating mode to the second operating mode.

In a possible implementation, the first field includes an operating mode switch duration indication.

In a possible implementation, the first field further includes a signal bandwidth.

In a possible implementation, the transceiver unit is further configured to receive a second frame from the second device, where the second frame includes a second field, the second frame is for initiating operating mode negotiation, and the second field is for recommending an operating mode parameter.

In a possible implementation, the second field includes an operating mode recommendation indication and/or an operating mode negotiate indication.

In a possible implementation, the transceiver unit is further configured to send a seventh frame to the second device before a current TXOP, where the seventh frame indicates switch time for the first device to switch from the first operating mode to the second operating mode.

The transceiver unit is further configured to receive an eighth frame from the second device, where the eighth frame is for responding to the seventh frame.

In a possible implementation, the transceiver unit is further configured to receive a fifth frame from the second device, where the fifth frame is for requesting the second device to transmit data to the first device.

In a possible implementation, the transceiver unit sends the first frame to the second device, and is specifically configured to: estimate, based on TXOP duration in the fifth frame, an amount of data to be transmitted at the second device, and when the amount of data to be transmitted at the second device is greater than or equal to a fourth threshold, send the first frame to the second device within the current TXOP.

In a possible implementation, the transceiver unit sends the first frame to the second device, and is specifically configured to: when time in a TXOP duration indication in the fifth frame exceeds a preset threshold, send the first frame to the second device within the current TXOP.

In a possible implementation, the transceiver unit is further configured to send a sixth frame to the second device, where the sixth frame is for responding to the second frame.

In a possible implementation, the transceiver unit is further configured to receive a ninth frame from the second device, where the ninth frame is used by the second device to transmit data to one or more first devices.

The transceiver unit is further configured to send a tenth frame to the second device, where the tenth frame is for responding to the ninth frame.

In a possible implementation, the transceiver unit is further configured to: when the first device switches from the first operating mode to the second operating mode, receive data from the second device.

In a possible implementation, the transceiver unit is further configured to send a third frame to the second device, where the third frame indicates that operating mode switching is completed.

In a possible implementation, the transceiver unit sends the third frame to the second device, and is specifically configured to: when the operating mode switch duration indication in the first field is a first value, send the third frame to the second device after completing operating mode switching.

In a possible implementation, the transceiver unit sends the third frame to the second device, and is specifically configured to: when the operating mode switch duration of the first device is greater than time in the operating mode switch duration indication in the first field, send the third frame to the second device after completing operating mode switching.

In a possible implementation, the transceiver unit sends the third frame to the second device, and is specifically configured to select an original signal bandwidth or a signal bandwidth after switching to send the third frame to the second device.

In a possible implementation, the first frame is a CTS frame or a trigger frame.

In a possible implementation, the second frame is a request to send RTS frame or a trigger frame.

In a possible implementation, the third frame is an ACK frame.

In a possible implementation, the fifth frame is an RTS frame.

In a possible implementation, the communication apparatus further includes:
a processing unit, configured to: prestore PHY layer module calibration data in different operating modes; and
select corresponding PHY layer module calibration data based on the first field, and configure a PHY layer register.

In a possible implementation, the processing unit prestores the PHY layer module calibration data in different operating modes, and is specifically configured to prestore PHY layer calibration data in a first bandwidth operating mode, where the first bandwidth is a bandwidth greater than or equal to the first threshold.

The transceiver unit is further configured to receive/send a signal by using a signal bandwidth less than the first bandwidth after channel switching.

In a possible implementation, the transceiver unit is further configured to receive a fourth frame from the second device, where the fourth frame indicates that the TXOP ends.

According to an eighth aspect, an embodiment of this application provides a communication apparatus.

The communication apparatus is applicable to a second device, a module (for example, a chip or a processor) in the second device, or a logical module or software that can implement all or some functions of the second device. For beneficial effect, refer to descriptions of the second aspect. Details are not described herein again. The communication apparatus has functions of implementing behavior in the method example in the second aspect. The function may be implemented by hardware, or may be implemented by hardware executing corresponding software. The hardware or the software includes one or more modules corresponding to the foregoing function.

In a possible implementation, the communication apparatus includes:
an establishment unit, configured to establish a wireless communication link with a first device, where the first device operates in a first operating mode; and
a transceiver unit, configured to communicate with the first device based on a second operating mode.

In a possible implementation, when a first condition is met, the transceiver unit communicates with the first device based on the second operating mode, and the first condition includes one or more of the following: the first device changes from a listening state to a data transmission state; or an amount of data to be transmitted between the first device and the second device changes from less than or equal to a first threshold to greater than the first threshold.

In a possible implementation, the first operating mode corresponds to a first bandwidth, and the second operating mode corresponds to a second bandwidth.

In a possible implementation, the second device operates in a third operating mode, and the third operating mode corresponds to a third bandwidth.

In a possible implementation, the first bandwidth is less than or equal to the third bandwidth, and the second bandwidth is less than or equal to the third bandwidth.

In a possible implementation, the transceiver unit is further configured to receive a first frame from the first device, where the first frame includes a first field, and the first field includes an operating mode parameter.

In a possible implementation, the first field includes an operating mode switch duration indication.

In a possible implementation, the first field further includes a signal bandwidth.

In a possible implementation, the transceiver unit is further configured to send a second frame to the first device, where the second frame includes a second field, the second frame is for initiating operating mode negotiation, and the second field is for recommending an operating mode parameter.

In a possible implementation, the second field includes an operating mode recommendation indication and/or an operating mode negotiate indication.

In a possible implementation, the transceiver unit sends the second frame to the first device, and is specifically configured to: when an amount of to-be-transmitted data of the second device is greater than or equal to a second threshold, or required transmission time of the to-be-transmitted data is greater than or equal to a third threshold, send the second frame to the first device.

In a possible implementation, the transceiver unit is further configured to:
receive a seventh frame from the first device before a current TXOP, where the seventh frame indicates switch time for the first device to switch from the first operating mode to the second operating mode; and
send an eighth frame to the first device, where the eighth frame is for responding to the seventh frame.

In a possible implementation, the transceiver unit is further configured to send a fifth frame to the first device, where the fifth frame is for requesting the second device to transmit data to the first device.

In a possible implementation, the transceiver unit is further configured to send a sixth frame to the first device, where the sixth frame is for responding to the second frame.

In a possible implementation, the transceiver unit is further configured to:
send a ninth frame to the first device, where the ninth frame is used by the second device to transmit data to one or more first devices; and
receive a tenth frame from the first device, where the tenth frame is for responding to the ninth frame.

In a possible implementation, the transceiver unit is further configured to: when receiving a first frame from the one or more first devices or fails to receive the first frame from the one or more first devices within a preset time, send data to the one or more first devices.

In a possible implementation, the transceiver unit is further configured to: when the first device switches from the first operating mode to the second operating mode, send data to the first device.

In a possible implementation, the transceiver unit is further configured to receive a third frame from the first device, where the third frame indicates that operating mode switching is completed.

In a possible implementation, the transceiver unit is further configured to: after receiving the third frame from the first device, deliver data to the first device.

In a possible implementation, the transceiver unit is further configured to: when the operating mode switch duration indication in the first field is a second value, deliver data to the first device after time in the operating mode switch duration indication.

In a possible implementation, the first frame is a CTS frame or a trigger frame.

In a possible implementation, the second frame is an RTS frame or a trigger frame.

In a possible implementation, the third frame is an ACK frame.

In a possible implementation, the fifth frame is an RTS frame.

In a possible implementation, the transceiver unit is further configured to send a fourth frame to the first device, where the fourth frame indicates that the TXOP ends.

According to a ninth aspect, an embodiment of this application provides a communication apparatus.

The communication apparatus is applicable to a first device, a module (for example, a chip or a processor) in the first device, or a logical module or software that can implement all or some functions of the first device. For beneficial effect, refer to descriptions of the third aspect. Details are not described herein again. The communication apparatus has functions of implementing behavior in the method example in the third aspect. The function may be implemented by hardware, or may be implemented by hardware executing corresponding software. The hardware or the software includes one or more modules corresponding to the foregoing function.

In a possible implementation, the communication apparatus includes:
a generation unit, configured to generate a first frame, where the first frame includes a first field, and the first field includes an operating mode parameter; and
a transceiver unit, configured to send the first frame to a second device.

In a possible implementation, the first field includes an operating mode switch duration indication.

In a possible implementation, the first field further includes a signal bandwidth.

In a possible implementation, the communication apparatus further includes:
a transceiver unit, configured to receive a second frame from the second device, where the second frame includes a second field, the second frame is for initiating operating mode negotiation, and the second field is for recommending an operating mode parameter.

In a possible implementation, the second field includes an operating mode recommendation indication and/or an operating mode negotiate indication.

In a possible implementation, the transceiver unit is further configured to receive a fifth frame from the second device, where the fifth frame is for requesting the second device to transmit data to the first device.

The transceiver unit sends the first frame to the second device, and is specifically configured to:
estimate, based on the fifth frame, the amount of data to be transmitted at the second device, and when a TXOP is greater than or equal to a fourth threshold, send the first frame to the second device within the current TXOP.

In a possible implementation, the transceiver unit sends the first frame to the second device, and is specifically configured to:
when time in a TXOP duration (duration) indication in the fifth frame exceeds a preset threshold, send the first frame to the second device within the current TXOP.

In a possible implementation, the transceiver unit is further configured to send a third frame to the second device, where the third frame indicates that operating mode switching is completed.

In a possible implementation, the transceiver unit sends the third frame to the second device, and is specifically configured to:
when the operating mode switch duration indication in the first field is a first value, send the third frame to the second device after operating mode switching is completed.

In a possible implementation, the transceiver unit sends the third frame to the second device, and is specifically configured to:
when the operating mode switch duration of the first device is greater than time in the operating mode switch duration indication in the first field, send the third frame to the second device after completing operating mode switching.

In a possible implementation, the transceiver unit sends the third frame to the second device, and is specifically configured to:
select an original signal bandwidth or a signal bandwidth after switching to send the third frame to the second device.

In a possible implementation, the first frame is a CTS frame or a trigger frame.

In a possible implementation, the second frame is an RTS frame or a trigger frame.

In a possible implementation, the third frame is an ACK frame.

In a possible implementation, the fifth frame is an RTS frame.

In a possible implementation, the communication apparatus further includes:
a processing unit, configured to: prestore PHY layer module calibration data in different operating modes.

The processing unit is further configured to: select corresponding PHY layer module calibration data based on the first field, and configure a PHY layer register.

In a possible implementation, the processing unit prestores the PHY layer module calibration data in different operating modes, and is specifically configured to prestore PHY layer calibration data in a first bandwidth operating mode, where a first bandwidth is a bandwidth greater than or equal to a first threshold.

The transceiver unit is further configured to receive/send a signal by using a signal bandwidth less than the first bandwidth after channel switching.

In a possible implementation, the transceiver unit is further configured to receive a fourth frame from the second device, where the fourth frame indicates that the TXOP ends.

According to a tenth aspect, an embodiment of this application provides a communication apparatus.

The communication apparatus is applicable to a second device, a module (for example, a chip or a processor) in the second device, or a logical module or software that can implement all or some functions of the second device. For beneficial effect, refer to descriptions of the fourth aspect. Details are not described herein again. The communication apparatus has functions of implementing behavior in the method example in the fourth aspect. The function may be implemented by hardware, or may be implemented by hardware executing corresponding software. The hardware or the software includes one or more modules corresponding to the foregoing function.

In a possible implementation, the communication apparatus includes:
a receiving unit, configured to receive a first frame from a first device, where the first frame includes a first field, and the first field includes an operating mode parameter.

In a possible implementation, the first field includes an operating mode switch duration indication.

In a possible implementation, the first field further includes a signal bandwidth.

In a possible implementation, the communication apparatus further includes:
a generation unit, configured to generate a second frame, where the second frame includes a second field, the second frame is for initiating operating mode negotiation, and the second field is for recommending an operating mode parameter; and
a sending unit, configured to send the second frame to the first device.

In a possible implementation, the second field includes an operating mode recommendation indication and/or an operating mode negotiate indication.

In a possible implementation, the sending unit sends the second frame to the first device, and is specifically configured to:
when an amount of to-be-transmitted data of the second device is greater than or equal to a second threshold, or required transmission time of the to-be-transmitted data is greater than or equal to a third threshold, send the second frame to the first device.

In a possible implementation, the sending unit is further configured to send a fifth frame to the first device, where the fifth frame is for requesting the second device to transmit data to the first device.

In a possible implementation, the receiving unit is further configured to receive a third frame from the first device, where the third frame indicates that operating mode switching is completed.

In a possible implementation, the sending unit is further configured to: after receiving the third frame from the first device, deliver data to the first device.

In a possible implementation, the sending unit is further configured to: when the operating mode switch duration indication in the first field is a second value, deliver data to the first device after time in the operating mode switch duration indication.

In a possible implementation, the first frame is a CTS frame or a trigger frame.

In a possible implementation, the second frame is an RTS frame or a trigger frame.

In a possible implementation, the third frame is an ACK frame.

In a possible implementation, the fifth frame is an RTS frame.

In a possible implementation, the sending unit is further configured to send a fourth frame to the first device, where the fourth frame indicates that a current TXOP ends.

According to an eleventh aspect, an embodiment of this application provides a communication apparatus.

The communication apparatus is applicable to a first device, a module (for example, a chip or a processor) in the first device, or a logical module or software that can implement all or some functions of the first device. For beneficial effect, refer to descriptions of the fifth aspect. Details are not described herein again. The communication apparatus has functions of implementing behavior in the method example in the fifth aspect. The function may be implemented by hardware, or may be implemented by hardware executing corresponding software. The hardware or the software includes one or more modules corresponding to the foregoing function.

In a possible implementation, the communication apparatus includes:
a receiving unit, configured to receive a second frame from a second device, where the second frame includes a second field, the second frame is for initiating operating mode negotiation, and the second field is for recommending an operating mode parameter.

In a possible implementation, the second field includes an operating mode recommendation indication and/or an operating mode negotiate indication.

In a possible implementation, the communication apparatus further includes:
a generation unit, configured to generate a first frame, where the first frame includes a first field, and the first field includes an operating mode parameter; and
a sending unit, configured to send the first frame to the second device.

In a possible implementation, the first field includes an operating mode switch duration indication.

In a possible implementation, the first field further includes a signal bandwidth.

In a possible implementation, the sending unit is further configured to send a sixth frame to the second device, where the sixth frame is for responding to the second frame.

In a possible implementation, the sending unit is further configured to send a third frame to the second device, where the third frame indicates that operating mode switching is completed.

In a possible implementation, the sending unit sends the third frame to the second device, and is specifically configured to:
when the operating mode switch duration indication in the first field is a first value, send the third frame to the second device after operating mode switching is completed.

In a possible implementation, the sending unit sends the third frame to the second device, and is specifically configured to:
when operating mode switch duration of the first device is greater than time in the operating mode switch duration indication in the first field, send the third frame to the second device after completing operating mode switching.

In a possible implementation, the sending unit sends the third frame to the second device, and is specifically configured to:
select an original signal bandwidth or a signal bandwidth after switching to send the third frame to the second device.

In a possible implementation, the first frame is a CTS frame or a trigger frame.

In a possible implementation, the second frame is an RTS frame or a trigger frame.

In a possible implementation, the third frame is an ACK frame.

In a possible implementation, the sixth frame is a CTS frame.

In a possible implementation, the receiving unit is further configured to receive a fourth frame from the second device, where the fourth frame indicates that a TXOP ends.

According to a twelfth aspect, an embodiment of this application provides a communication apparatus.

The communication apparatus is applicable to a second device, a module (for example, a chip or a processor) in the second device, or a logical module or software that can implement all or some functions of the second device. For beneficial effect, refer to descriptions of the sixth aspect. Details are not described herein again. The communication apparatus has functions of implementing behavior in the method example in the sixth aspect. The function may be implemented by hardware, or may be implemented by hardware executing corresponding software. The hardware or the software includes one or more modules corresponding to the foregoing function.

In a possible implementation, the communication apparatus includes:
a generation unit, configured to generate a second frame, where the second frame includes a second field, the second frame is for initiating operating mode negotiation, and the second field is for recommending an operating mode parameter; and
a sending unit, configured to send the second frame to a first device.

In a possible implementation, the second field includes an operating mode recommendation indication and/or an operating mode negotiate indication.

In a possible implementation, the sending unit sends the second frame to the first device, and is specifically configured to:
when an amount of to-be-transmitted data of the second device is greater than or equal to a second threshold, or required transmission time of the to-be-transmitted data is greater than or equal to a third threshold, send the second frame to the first device.

In a possible implementation, the communication apparatus further includes:
a receiving unit, configured to receive a first frame from a first device, where the first frame includes a first field, and the first field includes an operating mode parameter.

In a possible implementation, the first field includes an operating mode switch duration indication.

In a possible implementation, the first field further includes a signal bandwidth.

In a possible implementation, the receiving unit is further configured to receive a sixth frame from the first device, where the sixth frame is for responding to the second frame.

In a possible implementation, the receiving unit is further configured to receive a third frame from the first device, where the third frame indicates that operating mode switching is completed.

In a possible implementation, the sending unit is further configured to: after receiving the third frame from the first device, deliver data to the first device.

In a possible implementation, the sending unit is further configured to: when the operating mode switch duration indication in the first field is a second value, deliver data to the first device after time in the operating mode switch duration indication.

In a possible implementation, the sending unit is further configured to: after receiving the sixth frame from the first device, deliver data to the first device.

In a possible implementation, the first frame is a CTS frame or a trigger frame.

In a possible implementation, the second frame is an RTS frame or a trigger frame.

In a possible implementation, the third frame is an ACK frame.

In a possible implementation, the sixth frame is a CTS frame.

In a possible implementation, the sending unit is further configured to send a fourth frame to the first device, where the fourth frame indicates that a TXOP ends.

According to a thirteenth aspect, a communication apparatus is provided. The communication apparatus may be the first device in the foregoing method embodiments, or a chip or a processor disposed in the first device. The communication apparatus may include a processor. The processor is coupled to a memory. The memory is configured to store a program or instructions. When the program or the instructions are executed by the processor, the communication apparatus performs the method performed by the first device, or the chip or the processor in the first device in the foregoing method embodiments.

According to a fourteenth aspect, a communication apparatus is provided. The communication apparatus may be the second device in the foregoing method embodiments, or a chip or a processor disposed in the second device. The communication apparatus may include a processor. The processor is coupled to a memory. The memory is configured to store a program or instructions. When the program or the instructions are executed by the processor, the communication apparatus performs the method performed by the second device, or the chip or the processor in the second device in the foregoing method embodiments.

According to a fifteenth aspect, an embodiment of this application provides a computer-readable storage medium. The computer-readable storage medium stores a computer program or computer instructions. When the computer program or the computer instructions are run on a computer, the computer is enabled to perform the method according to the first aspect or any possible implementation of the first aspect, the second aspect or any possible implementation of the second aspect, the third aspect or any possible implementation of the third aspect, the fourth aspect or any possible implementation of the fourth aspect, the fifth aspect or any possible implementation of the fifth aspect, or the sixth aspect or any possible implementation of the sixth aspect.

According to a sixteenth aspect, an embodiment of this application provides a computer program product including program instructions. When the computer program product runs on a computer, the computer is enabled to perform the method according to the first aspect or any possible implementation of the first aspect, the second aspect or any possible implementation of the second aspect, the third aspect or any possible implementation of the third aspect, the fourth aspect or any possible implementation of the fourth aspect, the fifth aspect or any possible implementation of the fifth aspect, or the sixth aspect or any possible implementation of the sixth aspect.

According to a seventeenth aspect, an embodiment of this application provides a chip system. The chip system includes a processor, configured to implement the functions in the foregoing methods. In a possible implementation, the chip system may further include a memory, configured to store program instructions and/or data. The chip system may include a chip, or may include a chip and another discrete component.

According to an eighteenth aspect, an embodiment of this application provides a communication system. The communication system includes the first device according to the first aspect or the third aspect, and may further include the second device according to the second aspect or the fourth aspect. The first device is configured to perform the method according to the first aspect or any possible implementation of the first aspect, the third aspect or any possible implementation of the third aspect, or the fifth aspect or any possible implementation of the fifth aspect. The second device is configured to perform the method according to the second aspect or any possible implementation of the second aspect, the fourth aspect or any possible implementation of the fourth aspect, or the sixth aspect or any possible implementation of the sixth aspect.

### BRIEF DESCRIPTION OF DRAWINGS

To describe embodiments of this application more clearly, the following briefly describes accompanying drawings used in embodiments. It is clear that a person of ordinary skill in the art can further obtain other drawings based on these accompanying drawings without creative efforts.
FIG. 1 is a diagram of a network architecture according to an embodiment of this application;
FIG. 2 is a diagram of an implementation scenario of an OMI mechanism according to an embodiment of this application;
FIG. 3(a) is a diagram of a structure of an OM control field according to an embodiment of this application;
FIG. 3(b) is a diagram of a scenario of data transmission within a TXOP according to an embodiment of this application;
FIG. 4 is an interaction flowchart of a communication method according to an embodiment of this application;
FIG. 5 is an interaction flowchart of another communication method according to an embodiment of this application;
FIG. 6 is a diagram of a structure of a second frame according to an embodiment of this application;
FIG. 7 is a diagram of structures of a second field according to an embodiment of this application;
FIG. 8 is a diagram of a structure of a first frame according to an embodiment of this application;
FIG. 9 is a diagram of structures of a first field according to an embodiment of this application;
FIG. 10 is a diagram of a structure of a third frame according to an embodiment of this application;
FIG. 11 is a diagram of a structure of a third field according to an embodiment of this application;
FIG. 12 is a diagram of a scenario in which a first device sends a third frame;
FIG. 13(a) to FIG. 13(f) are diagrams of example descriptions of a communication method according to an embodiment of this application;
FIG. 14 is an interaction flowchart of still another communication method according to an embodiment of this application;
FIG. 15(a) to FIG. 15(c) are diagrams of example descriptions of another communication method according to an embodiment of this application;
FIG. 16 is an interaction flowchart of still another communication method according to an embodiment of this application;
FIG. 17 is a diagram of an example description of a communication method according to an embodiment of this application;
FIG. 18(a) and FIG. 18(b) are diagrams of example descriptions of a communication method in a multi-user scenario according to an embodiment of this application;
FIG. 19 is a diagram of a structure of a communication apparatus according to an embodiment of this application;
FIG. 20 is a diagram of a structure of another communication apparatus according to an embodiment of this application;
FIG. 21 is a diagram of a structure of still another communication apparatus according to an embodiment of this application;
FIG. 22 is a diagram of a structure of still another communication apparatus according to an embodiment of this application;
FIG. 23 is a diagram of a structure of still another communication apparatus according to an embodiment of this application;
FIG. 24 is a diagram of a structure of still another communication apparatus according to an embodiment of this application; and
FIG. 25 is a diagram of a structure of still another communication apparatus according to an embodiment of this application.

### DESCRIPTION OF EMBODIMENTS

The following describes the technical solutions in embodiments of this application with reference to the accompanying drawings in embodiments of this application. The terms "system" and "network" may be used interchangeably in embodiments of this application. Unless otherwise specified, "/" represents an "or" relationship between associated objects. For example, A/B may represent A or B. The term "and/or" in this application is merely an association relationship for describing associated objects, and represents that three relationships may exist. For example, A and/or B may represent the following three cases: Only A exists, both A and B exist, and only B exists, where A and B may be singular or plural. In addition, in the descriptions of this application, "a plurality of" means two or more than two unless otherwise specified. "At least one of the following items (pieces)" or a similar expression thereof indicates any combination of these items, including a single item (piece) or any combination of a plurality of items (pieces). For example, at least one of a, b, or c may represent a, b, c, a and b, a and c, b and c, or a, b, and c, where a, b, and c may be singular or plural. In addition, to clearly describe the technical solutions in embodiments of this application, the terms such as "first" and "second" are used in embodiment of this application to distinguish between same items or similar items that provide basically same network elements or purposes. A person skilled in the art may understand that the terms such as "first" and "second" do not limit a quantity or an execution sequence, and the terms such as "first" and "second" do not indicate a definite difference.

Reference to "an embodiment", "some embodiments", or the like described in embodiments of this application indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

The objectives, technical solutions, and beneficial effect of this application are further described in detail in the following specific implementations. It should be understood that the following descriptions are merely specific implementations of this application, but are not intended to limit the protection scope of this application. Any modification, equivalent replacement, or improvement made based on technical solutions of this application shall fall within the protection scope of this application.

It should be understood that embodiments of this application are applicable to a sensing sensing system, applicable to a system that complies with an IEEE 802.11 system standard, for example, 802.11bf, 802.11a/b/g, 802.11n, 802.11ac, 802.11ax, or a next generation thereof, for example, 802.11be, Wi-Fi 7, or EHT, or a further next generation thereof, for example, a wireless local area network system that complies with an 802.11 series protocol, for example, Wi-Fi 8, UHR, or Wi-Fi AI, or a wireless personal area network system based on ultra-wideband UWB, or applicable to a wireless local area network (wireless local area network, WLAN) scenario. Alternatively, embodiments of this application are applicable to a wireless local area network system, for example, an internet of things (internet of things, IoT) network or a vehicle to X (vehicle to X, V2X) network. Certainly, embodiments of this application are further applicable to another possible communication system, for example, a long term evolution (long term evolution, LTE) system, an LTE frequency division duplex (frequency division duplex, FDD) system, LTE time division duplex (time division duplex, TDD), a universal mobile telecommunications system (universal mobile telecommunications system, UMTS), a worldwide interoperability for microwave access (worldwide interoperability for microwave access, WiMAX) communication system, and a future 6G communication system.

The following uses an example in which embodiments of this application are applicable to a WLAN scenario. It should be understood that the WLAN starts from the 802.11a/g standard, and develops to 802.11n, 802.11ac, 802.11ax, and 802.11be and Wi-Fi 8 that are currently being discussed. 802.11n can also be referred to as high throughput (high throughput, HT), 802.11ac can also be referred to as very high throughput (very high throughput, VHT), 802.11ax can also be referred to as high efficiency (high efficiency, HE) or Wi-Fi 6, and 802.11be can also be referred to as extremely high throughput (extremely high throughput, EHT) or Wi-Fi 7. Standards before HT, such as 802.11a/b/g, are collectively referred to as non-high throughput (non-HT).

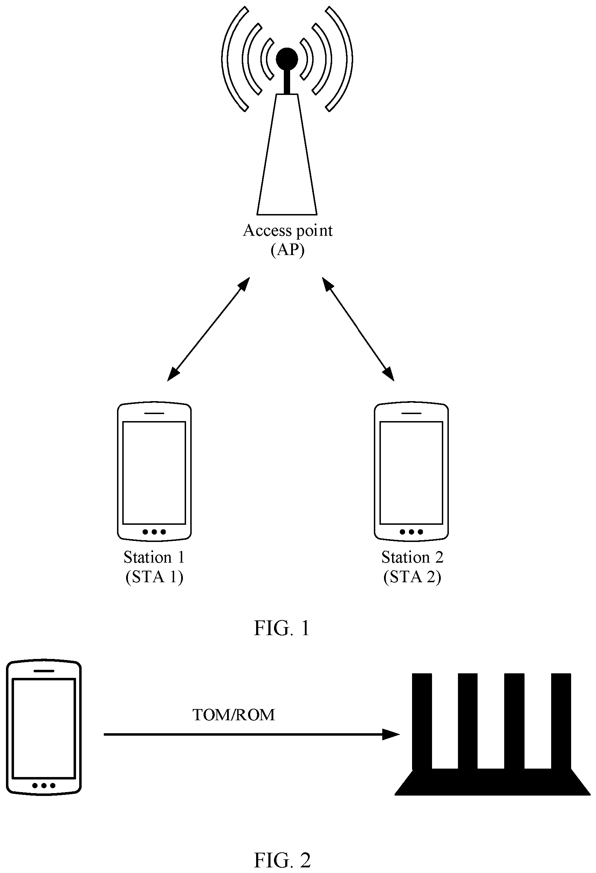

FIG. 1 is a diagram of a network architecture according to an embodiment of this application. As shown in FIG. 1, an example in which a network architecture includes one wireless access point AP and two stations is used for description. A STA associated with an AP can receive a radio frame sent by the AP, and can also send a radio frame to the AP. In addition, embodiments of this application are also applicable to communication between APs. For example, the APs may communicate with each other over a distributed system (distributed system, DS). Embodiments of this application are also applicable to communication between STAs. It should be understood that quantities of APs and STAs in FIG. 1 are merely an example. There may be more or less APs and STAs.

The STA in embodiments of this application is an apparatus having a wireless communication function, supports communication based on a WLAN protocol, and has a capability of communicating with another station or the access point in the WLAN network. In the WLAN system, the station may be referred to as a non-access point station (non-access point station, non-AP STA). For example, the STA is any user communication device that allows a user to communicate with an AP and further communicate with a WLAN. The apparatus may be an entire device, or may be a chip or a processing system installed in the entire device. The device in which the chip or the processing system is installed may implement the method and the function in embodiments of this application under control of the chip or the processing system. For example, the STAs may be various user terminals, user apparatuses, access apparatuses, subscriber stations, subscriber units, mobile stations, user agents, user devices, or other names that have a wireless communication function. The user terminal may include various handheld devices, vehicle-mounted devices, wearable devices, computing devices, or other processing devices connected to a wireless modem that have a wireless communication function; and various forms of user equipment (user equipment, UE), mobile stations (mobile stations, MSs), terminals (terminals), terminal equipment (terminal equipment), portable communication devices, handheld devices, portable computing devices, entertainment devices, game devices or systems, global positioning system devices, any other suitable device configured to perform network communication through a wireless medium, or the like. For example, the STAs may be routers, switches, bridges, or the like. Herein, for ease of description, the devices mentioned above are collectively referred to as stations or STAs.

The access point (for example, an AP) in embodiments of this application is an apparatus having a wireless communication function, supports communication based on a WLAN protocol, has a function of communicating with another device (for example, a station or another access point) in a WLAN network, and certainly, may further have a function of communicating with another device. In the WLAN system, the access point may be referred to as an access point station (AP STA). The apparatus may be an entire device, or may be a chip or a processing system installed in the entire device. The device in which the chip or the processing system is installed may implement the method and the function in embodiments of this application under control of the chip or the processing system. The AP in embodiments of this application may be an apparatus that provides a service for the STA, and may support 802.11 series protocols. For example, the AP may be a communication entity such as a communication server, a router, a switch, or a bridge. The AP may include a macro base station, a micro base station, a relay station, and the like in various forms. Certainly, the AP may alternatively be a chip and a processing system in these devices in various forms, to implement the method and the function in embodiments of this application.

The AP and the STA in embodiments of this application may be an AP and a STA that are applicable to an IEEE 802.11 system standard. The AP is an apparatus that is deployed in a wireless communication network and that provides a wireless communication function for a STA associated with the AP. The AP may be used as a center of the communication system, and is usually a network-side product that supports MAC and PHY in the 802.11 system standard, for example, may be a communication device such as a base station, a router, a gateway, a repeater, a communication server, a switch, or a bridge. The base station may include a macro base station, a micro base station, a relay station, or the like in various forms. Herein, for ease of description, the devices mentioned above are collectively referred to as APs. The STA is usually a terminal product that supports a media access control (media access control, MAC) layer and a physical (physical, PHY) layer in the 802.11 system standard, for example, a mobile phone or a notebook computer.

The WLAN system can provide high-speed and low-latency transmission. With continuous evolution of WLAN application scenarios, the WLAN system is applied to more scenarios or industries, for example, the internet of things industry, the vehicle to X industry, the banking industry, enterprise offices, exhibition halls of stadiums, concert halls, hotel rooms, dormitories, wards, classrooms, supermarkets, squares, streets, production workshops, and warehousing. Certainly, a device supporting WLAN communication (for example, an access point or a station) may be a sensor node (for example, a smart water meter, a smart electric meter, or a smart air detection node) in a smart city, a smart device (for example, a smart camera, a projector, a display, a television, a speaker, a refrigerator, or a washing machine) in a smart home, a node and an entertainment terminal (for example, a wearable device such as an AR device or a VR device) in the internet of things, a smart device (for example, a printer, a projector, a loudspeaker, or a speaker) in a smart office, an vehicle to X device in the vehicle to X, infrastructure (for example, a vending machine, a self-service navigation desk of a supermarket, a self-service cashier desk, or a self-service meal-ordering machine) in a daily life scenario, a device in a large-scale stadium and a music hall, or the like. Specific forms of the STA and the AP are not specifically limited in embodiments of this application, and are merely examples for description herein.

For ease of understanding embodiments of the present invention, the following first describes technical solutions currently included in implementation of an OMI mechanism, and the following provides an example for description.

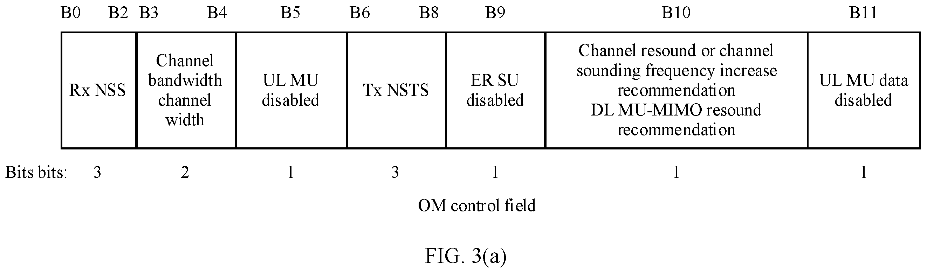

The OMI mechanism is introduced into the 802.11ax standard to improve flexibility of a Wi-Fi device. In the OMI mechanism, a STA is an OMI initiator, and an AP is an OMI responder. The STA may send, to the AP, a data frame or a control frame that includes an operating mode (operating mode, OM) control field, so that the STA dynamically switches a single-user/multi-user operating mode, a channel bandwidth, a maximum receiver number of spatial streams, and the like. For example, FIG. 2 is a diagram of an implementation scenario of an OMI mechanism according to an embodiment of this application. As shown in FIG. 2, a STA may switch a single-user/multi-user operating mode of an uplink by sending a transmit operating mode (transmit operating mode, TOM) to an AP, or may switch a channel bandwidth and a maximum number of spatial streams of a downlink by sending a receive operating mode (receive operating mode, ROM) to the AP. In a possible implementation, FIG. 3(a) is a diagram of a structure of an OM control field according to an embodiment of this application. As shown in FIG. 3(a), the OM control field may include a receiver number of spatial streams (receiver number of spatial streams, Rx NSS), a channel bandwidth (channel width), uplink multi-user disabled (uplink multi-user disabled, UL MU disabled), a transmitter number of space-time streams (transmitter number of space-time streams, Tx NSTS), ER single user disabled (single user disabled, ER SU disabled), a channel resound or channel sounding increase recommendation (DL MU-MIMO resound recommendation), uplink multi-user data disabled (uplink multi-user data disabled, UL MU data disabled), and the like.

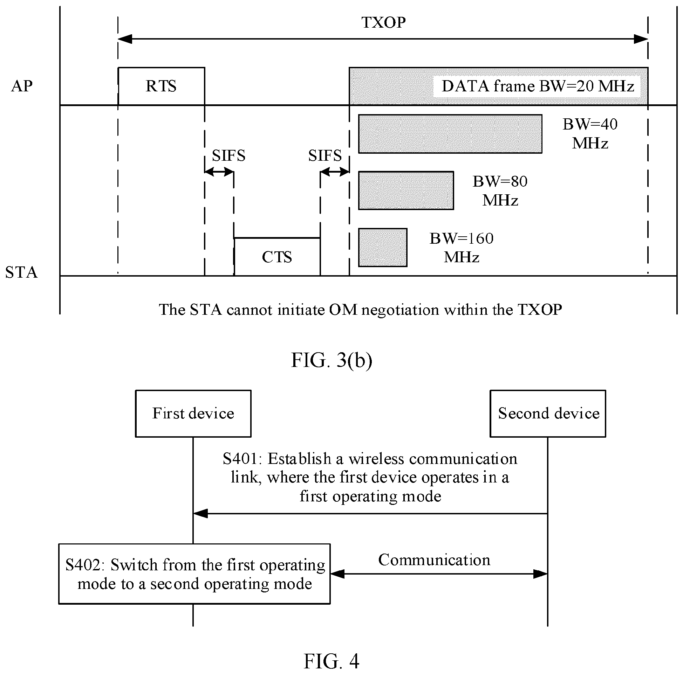

The current OMI mechanism has the following disadvantages:
1. Only a STA is supported to initiate OM negotiation. As a result, flexibility of operating mode switching is poor and service transmission efficiency is low.
2. As shown in FIG. 3(b), which is a diagram of a scenario of data transmission within a TXOP according to an embodiment of this application, when an AP initiates downlink data transmission, a STA cannot initiate OM negotiation and complete operating mode switching within the TXOP by sensing an amount of data to be transmitted at the AP. Poor timeliness of operating mode switching of the STA is caused.
3. A STA cannot notify an AP of a switching state or switching completion time of a current operating mode, resulting in a throughput decrease and a transmission latency increase due to frequent data packet retransmission, a packet loss, or the like caused by the AP delivering data in advance.
4. Operating mode switching latency of the STA is high, and cannot meet a service requirement with a high latency requirement.

Based on the disadvantages, embodiments of this application provide a communication method. A first device may generate and send, to a second device, a first frame indicating whether an operating mode parameter is included, so that the first device actively initiates operating mode negotiation, or responds, based on the first frame, to operating mode negotiation initiated by the second device, thereby improving the flexibility of operating mode switching and improving the service transmission efficiency.

This application provides a plurality of transmission methods of operating mode switching. The following separately describes the transmission methods by using the following embodiments. Some of the transmission methods of operating mode switching are only for a part of one procedure in the OMI mechanism, and some may be applied to any one or more procedures in the OMI mechanism. It should be understood that the transmission methods of operating mode switching may be used in combination with each other. For example, one method may be used in one procedure in the OMI mechanism, and another method may be used in another procedure, or both one method and another method may be used in one procedure in the OMI mechanism.

It should be understood that the OMI mechanism may change with evolution of the technical solutions, and the technical solutions provided in this application are not limited to a process described below. Further, descriptions of scenarios in embodiments of this application are merely examples, and the solutions in embodiments of this application are not limited to being applicable to only the described scenarios, and are also applicable to a scenario in which a similar problem exists.

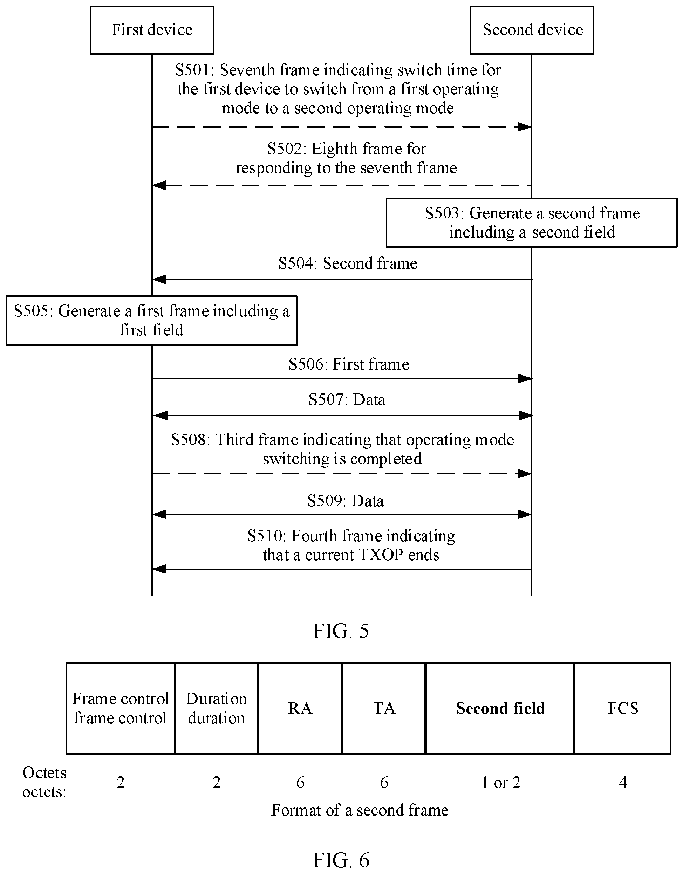

In embodiments (for example, the following embodiment corresponding to FIG. 5 to FIG. 9) of this application, an example in which the first device and the second device are used as execution bodies of interaction examples is used for illustrating the method, and the execution bodies of the interaction examples are not limited in this application. For example, the first device may alternatively be a chip, a chip system, or a processor that supports the first device in implementing the method, or may be a logic module or software that can implement all or some functions of the first device. The second device may alternatively be a chip, a chip system, or a processor that supports the second device in implementing the method, or may be a logic module or software that can implement all or some functions of the second device. Embodiments may be described by using an example in which the first device is a STA and the second device is an AP. Embodiments of this application are uniformly described herein, and details are not described below again.

FIG. 4 is an interaction flowchart of a communication method according to an embodiment of this application. As shown in FIG. 4, the communication method includes but is not limited to the following steps.

S401: A first device establishes a wireless communication link with a second device, where the first device operates in a first operating mode.

The first device establishes the wireless communication link with the second device. The first device may operate in the first operating mode, and the second device may operate in a third operating mode.

Different operating modes may correspond to different bandwidths. The first operating mode may correspond to a first bandwidth, and the first bandwidth may be a first channel bandwidth. A second operating mode may correspond to a second bandwidth, and the second bandwidth may be a second channel bandwidth. The third operating mode may correspond to a third bandwidth, and the first bandwidth may be a third channel bandwidth. The first bandwidth is less than or equal to the third bandwidth. The second bandwidth is less than or equal to the third bandwidth.

Alternatively, different operating modes may correspond to different power consumption operating modes. For example, the first operating mode is a low power consumption monitoring mode, and the second operating mode is a high power consumption receiving mode.

S402: The first device switches from the first operating mode to the second operating mode, and communicates with the second device.

In a possible implementation, when a first condition is met, the first device may switch from the first operating mode to the second operating mode, and the first condition includes one or more of the following:
the first device changes from a listening state to a data transmission state; or
an amount of data to be transmitted between the first device and the second device changes from less than or equal to a first threshold to greater than the first threshold. The first threshold may be predefined.

An implementation in which the first device switches from the first operating mode to the second operating mode may be any implementation shown in FIG. 5, FIG. 14, and FIG. 16. Details are described below.

FIG. 5 is an interaction flowchart of another communication method according to an embodiment of this application. As shown in FIG. 5, the communication method includes but is not limited to the following steps. Steps S501, S502, and S508 are optional.

S501: A first device sends, to a second device, a seventh frame indicating switch time for the first device to switch from a first operating mode to a second operating mode. Correspondingly, the second device receives the seventh frame from the first device.

Before a current TXOP starts, the first device and the second device may specify the switch time for the first device to switch from the first operating mode to the second operating mode. An implementation may be any one of the following:

Implementation 1 is static negotiation. Specifically, the first device and the second device may agree, in a manner specified in a protocol or predefined, on the switch time for the first device to switch from the first operating mode to the second operating mode. Optionally, the first device and the second device may not send a first frame and a second frame.

Implementation 2 is semi-static negotiation. Specifically, in a process in which the first device accesses the second device, an association frame for access interaction may carry the switch time for the first device to switch from the first operating mode to the second operating mode.

Implementation 3 is dynamic negotiation. Specifically, the first device may send the seventh frame to the second device, to notify the second device of the switch time for the first device to switch from the first operating mode to the second operating mode.

S502: The second device sends, to the first device, an eighth frame for responding to the seventh frame. Correspondingly, the first device receives the eighth frame from the second device.

In the implementation 3 in which the first device and the second device in the step S501 specify, before the current TXOP starts, the switch time for the first device to switch from the first operating mode to the second operating mode, the second device may further send, to the first device, the eighth frame for responding to the seventh frame and indicating that the switch time for the first device to switch from the first operating mode to the second operating mode is known.

S503: The second device generates the second frame including a second field, where the second frame is for initiating operating mode negotiation, and the second field is for recommending an operating mode parameter.

That the second field is for recommending the operating mode parameter may be understood as that the second device recommends the operating mode parameter to the first device, or that the second device indicates the operating mode parameter to the first device. In other words, the first device may determine an operating mode parameter with reference to the second field or directly use the operating mode parameter indicated by the second field.

The second frame may be understood as an RTS frame including the second field, a trigger (trigger) frame including the second field, a management frame including the second field, or an action frame including the second field. In a possible implementation, the second frame may be an OMI RTS frame. It may be understood that the OMI RTS frame is merely an example name, or may have another name. The name of the second frame is not limited in this embodiment.

FIG. 6 is a diagram of a structure of the second frame according to this embodiment of this application. As shown in FIG. 6, the second frame may be the RTS frame including the second field. B7 to B2 of a frame control (frame control) field of the second frame are 101111. The second frame may include the frame control (frame control) field, a duration (duration) field, a receiver address (receiver address, RA) field, a transmitter address (transmitter address, TA) field, the second field, and a frame check sequence (frame check sequence, FCS) field.

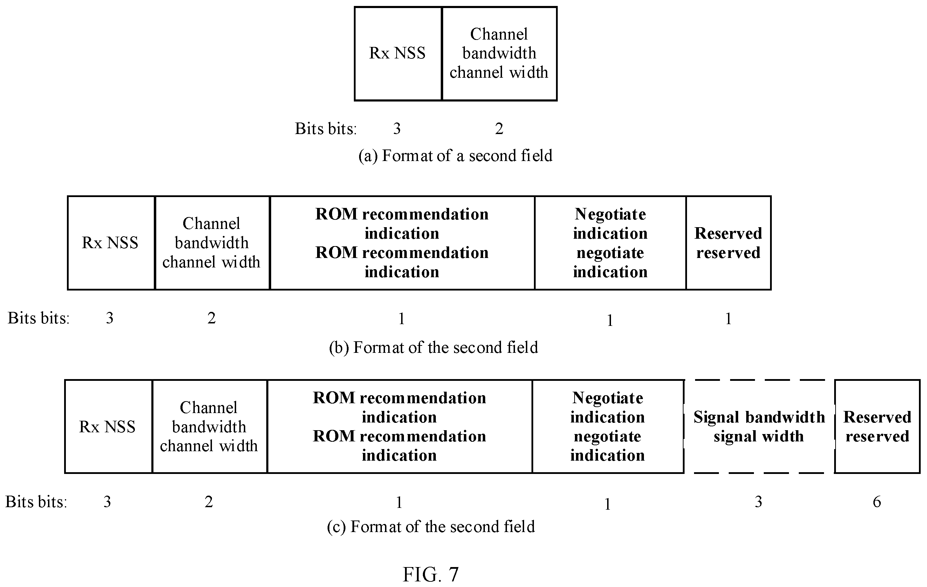

FIG. 7 is a diagram of structures of the second field according to this embodiment of this application. In a possible implementation, as shown in (a) in FIG. 7, the second field may be an OM control (OM control) field, and the OM control field may include an Rx NSS and a channel bandwidth (channel width). For specific field names and corresponding descriptions, refer to Table 1 below.

**Table 1 Field names and corresponding descriptions**

| Field name | Description |
|---|---|
| Rx NSS | Indicates a maximum number of spatial streams received by the first device |
| Channel bandwidth (channel width) | Indicates a transmit/receive operating channel bandwidth of the first device |

In another possible implementation, as shown in (b) in FIG. 7, the second field may be an extended OM control (extended OM control) field. In addition to the Rx NSS and the channel bandwidth (channel width), the extended OM control field may further include an operating mode recommendation indication (ROM recommendation indication) and/or an operating mode negotiate indication (negotiate indication), and may further include a reserved (reserved) subfield. For specific field names and corresponding descriptions, refer to Table 2 below.

**Table 2 Field names and corresponding descriptions**

| Field name | Description |
|---|---|
| Rx NSS | Indicates a maximum number of spatial streams received by the first device |
| Channel bandwidth (channel width) | Indicates a transmit/receive operating channel bandwidth of the first device |
| Operating mode recommendation indication (ROM recommendation indication) | A value 1 indicates that the current frame includes a ROM recommendation of the second device for the first device, and a value 0 indicates that the second device has no ROM recommendation for the first device. |
| Operating mode negotiate indication (negotiate indication) | A value 1 indicates that the second device indicates the first device to initiate OM negotiation, and a value 0 indicates that the second device has no recommendation for whether the first device initiates OM negotiation. |
| Reserved (reserved) | Reserved |
| Switch duration | Indicates operating mode switch duration of the first device |

Further, optionally, as shown in (c) in FIG. 7, the extended OM control field may further include a signal bandwidth (signal width). For specific signal bandwidth values and corresponding descriptions, refer to Table 3 below.

**Table 3 Signal bandwidth values and corresponding descriptions**

| Signal bandwidth | |
|---|---|
| Value | Description |
| 0 | Signal transmission only on a primary 20 MHz channel |
| 1 | Signal transmission only on a primary 40 MHz channel |
| 2 | Signal transmission only on a primary 80 MHz channel |
| 3 | Signal transmission only on a primary 160 MHz channel |
| 4 | Signal transmission only on a primary 320 MHz channel |
| Others | Reserved |

Optionally, the second device may prestore PHY layer module calibration data in different operating modes, select corresponding PHY layer module calibration data based on the operating mode parameter (for example, the channel bandwidth (channel width)) included in the second field in the second frame, and configure a PHY layer register. The PHY layer module calibration data in different operating modes is prestored, and the PHY layer register is configured based on the operating mode parameter in the second field, so that operating mode switch time and latency can be reduced. For example, the second device may switch from operating on a 20 MHz channel bandwidth to operating on a 160 MHz channel bandwidth, and the operating mode switch time may be reduced from 100 ms to 200 ms to about 100 µs, thereby implementing microsecond-level channel switching.

The second device prestores the PHY layer module calibration data in different operating modes. In a possible implementation, the second device may prestore PHY layer module calibration data in a first bandwidth operating mode, and a first bandwidth is a bandwidth greater than or equal to a first threshold, so that the second device may receive/send a signal by using a signal bandwidth less than the first bandwidth after channel switching.

When the second field includes the signal bandwidth (signal width), the second device may select corresponding PHY layer module calibration data based on the channel bandwidth (signal width) included in the second field in the second frame, and configure the PHY layer register. For example, the second device keeps operating on the 20 MHz channel bandwidth, and may switch a signal bandwidth on the 20 MHz channel bandwidth, for example, from a 20 MHz signal bandwidth on the 20 MHz channel bandwidth to a 160 MHz signal bandwidth on the 20 MHz channel bandwidth.

S504: The second device sends the second frame to the first device. Correspondingly, the first device receives the second frame from the second device.

In a possible implementation, when an amount of data to be transmitted by the second device is greater than or equal to a second threshold, or required transmission time of the data to be transmitted by the second device is greater than or equal to a third threshold, the second device may send the second frame to the first device.

The second device may actively initiate OM negotiation to the first device based on information such as an amount of to-be-transmitted data of a service of the second device, a latency requirement, and a channel state, thereby improving flexibility of operating mode switching negotiation. In addition, when the second device initiates downlink data transmission, the first device may not sense an amount of data transmitted at the second device, and the first device may only respond to the second frame from the second device, and implement operating mode switching, thereby improving timeliness of operating mode switching of the first device and reducing latency of operating mode switching.

The second device may actively initiate OM negotiation by sending the second frame to the first device, and set the operating mode negotiate indication (negotiate indication) field included in the second field in the second frame to 1, indicating that the operating mode parameter is recommended to the first device.

The second device may further select an appropriate and efficient ROM configuration solution for the first device based on the information such as the amount of the to-be-transmitted data of the service, the latency requirement, and the channel state. Specifically, the operating mode recommendation indication (ROM recommendation indication) field included in the second field in the second frame is set to 1, indicating that the Rx NSS field and the channel bandwidth field are used to carry ROM recommendation information. The second device is allowed to recommend a ROM configuration solution to the first device based on the information such as the amount of the to-be-transmitted data of the service, the latency requirement, and the channel state, so that efficiency of operating mode switching of the first device can be improved.

S505: The first device generates the first frame including a first field, where the first field includes an operating mode parameter.

The first frame may be understood as a CTS frame including the first field, a trigger (trigger) frame including the first field, a management frame including the first field, or an action frame including the first field. In a possible implementation, the first frame may be an OMI CTS frame. It may be understood that the OMI CTS frame is merely an example name, or may have another name. The name of the first frame is not limited in this embodiment.

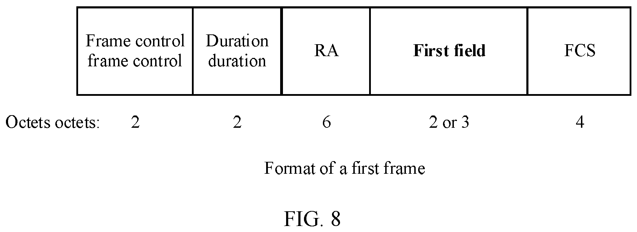

FIG. 8 is a diagram of a structure of the first frame according to this embodiment of this application. As shown in FIG. 8, the first frame may be the CTS frame including the first field. B7 to B2 of a frame control (frame control) field of the first frame are 110011. The first frame may include the frame control (frame control) field, a duration (duration) field, a receiver address (receiver address, RA) field, the first field, and a frame check sequence (frame check sequence, FCS) field.

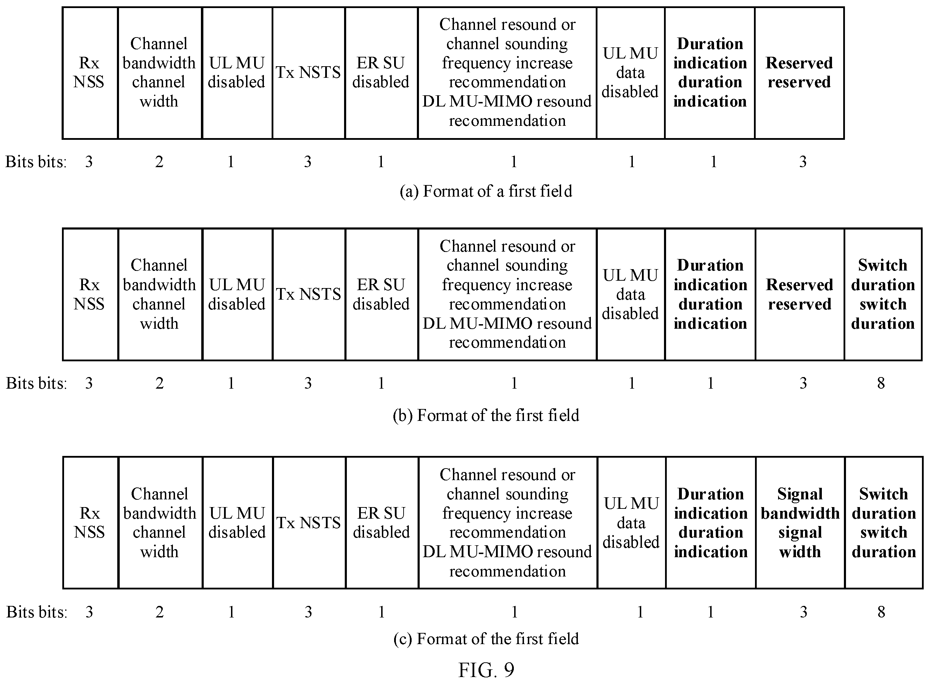

FIG. 9 is a diagram of structures of the first field according to this embodiment of this application. In a possible implementation, the first field may be the OM control (OM control) field shown in FIG. 3(a). In another possible implementation, as shown in (a) in FIG. 9, the second field may be an extended OM control (extended OM control) field. In addition to Rx NSS, channel bandwidth (channel width), UL MU disabled, Tx NSTS, ER SU disabled, channel resound or channel sounding increase recommendation (DL MU-MIMO resound recommendation) and UL MU data disabled subfields, the extended OM control field may further include an operating mode switch duration (duration indication) subfield and a reserved (reserved) subfield. For specific field names and corresponding descriptions, refer to Table 4 below.

**Table 4 Field names and corresponding descriptions**

| Field name | Description |
|---|---|
| Operating mode switch duration (duration indication) | A value 1 indicates that the current frame includes switch duration, and a value 0 indicates that the current frame does not include the switch duration. When the value is 0, the first device needs to send a third frame after switching is completed. |
| Reserved (reserved) | Reserved |

Further, optionally, as shown in (b) in FIG. 9, the extended OM control field may further include switch duration (switch duration). For specific field names and corresponding descriptions, refer to Table 5 below.

**Table 5 Field name and corresponding description**

| Field name | Description |
|---|---|
| Switch duration | Indicates operating mode switch duration of the first device |

Alternatively, further, optionally, as shown in (c) in FIG. 9, the extended OM control field may further include a signal bandwidth (signal width).

The first device may prestore PHY layer module calibration data in different operating modes. When the first device receives the second frame from the second device, the first device may send, to the second device, the first frame for responding to the second frame, select corresponding PHY layer module calibration data based on the operating mode parameter (for example, a channel bandwidth (channel width)) included in the first field in the first frame, and configure the PHY layer register. The PHY layer module calibration data in different operating modes is prestored, and the PHY layer register is configured based on the operating mode parameter in the first field, so that operating mode switch time and latency can be reduced. For example, the first device may switch from operating on a 20 MHz channel bandwidth to operating on a 160 MHz channel bandwidth, and the operating mode switch time may be reduced from 100 ms to 200 ms to about 100 µs, thereby implementing microsecond-level channel switching.

The first device prestores the PHY layer module calibration data in different operating modes. In a possible implementation, the first device may prestore PHY layer module calibration data in a first bandwidth operating mode, and a first bandwidth is a bandwidth greater than or equal to a first threshold, so that the first device may receive/send a signal by using a signal bandwidth less than the first bandwidth after channel switching, thereby simplifying implementation complexity.

When the first field includes the signal bandwidth (signal width), the first device may select corresponding PHY layer module calibration data based on the channel bandwidth (signal width) included in the first field in the first frame, and configure the PHY layer register. For example, the first device keeps operating on the 20 MHz channel bandwidth, and may switch a signal bandwidth on the 20 MHz channel bandwidth, for example, from a 20 MHz signal bandwidth on the 20 MHz channel bandwidth to a 160 MHz signal bandwidth on the 20 MHz channel bandwidth.

S506: The first device sends the first frame to the second device. Correspondingly, the second device receives the first frame from the first device.

After receiving the second frame from the second device, the first device may send the first frame to the second device in response to the second frame.

S507: During switching of the first device from the first operating mode to the second operating mode (switch duration), perform data transmission between the first device and the second device.

For example, the second device may send data (for example, a protocol data unit (presentation protocol data unit, PPDU)) to the first device, and the first device sends an ACK frame to the second device to indicate that the data is received or indicate whether the data is to be resent. Alternatively, the first device may send data to the second device, and the second device sends an ACK frame to the first device.

During mode switching of the first device, the first device and the second device receive/send data, to improve air interface utilization, and prevent another user from preempting a channel due to long switch time.

S508: The first device sends, to the second device, the third frame indicating that operating mode switching is completed. Correspondingly, the second device receives the third frame from the first device.

The third frame may be understood as an ACK frame indicating that operating mode switching is completed. In other words, after the first device completes switching from the first operating mode to the second operating mode, the first device may send the third frame to the second device. In a possible implementation, the third frame may be an OMI ACK frame. It may be understood that the OMI ACK frame is merely an example name, or may have another name. The name of the third frame is not limited in this embodiment.

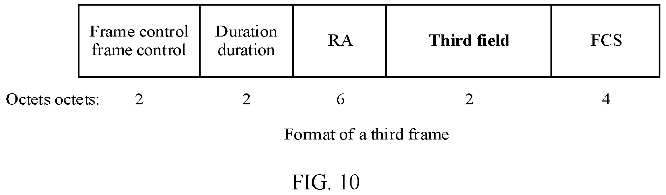

FIG. 10 is a diagram of a structure of the third frame according to this embodiment of this application. As shown in FIG. 10, B7 to B2 of a frame control (frame control) field of the third frame are 110111. The third frame may include the frame control (frame control) field, a duration (duration) field, a receiver address (receiver address, RA) field, a third field, and a frame check sequence (frame check sequence, FCS) field.

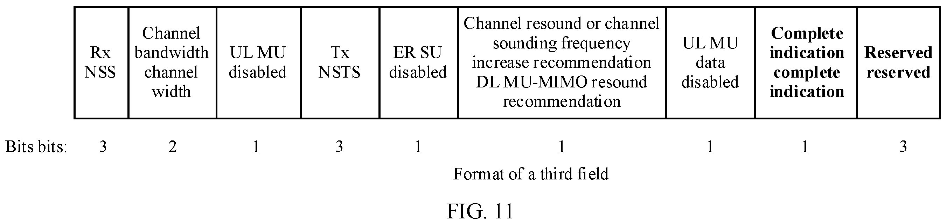

FIG. 11 is a diagram of a structure of the third field according to this embodiment of this application. In a possible implementation, as shown in FIG. 11, the third field may be an OM announcement (OM announcement) field, and the OM announcement field may include Rx NSS, channel bandwidth (channel width), UL MU disabled, Tx NSTS, ER SU disabled, channel resound or channel sounding increase recommendation (DL MU-MIMO resound recommendation), UL MU data disabled, complete indication (complete indication), and reserved (reserved) subfields. For specific field names in the third field and corresponding descriptions, refer to Table 6 below.

**Table 6 Field names and corresponding descriptions**

| Field name | Description |
|---|---|
| Complete indication (complete indication) | A value 1 indicates that the first device has completed operating mode switching, and a value 0 indicates that the first device has not completed operating mode switching. |
| Reserved (reserved) | Reserved |

An implementation in which the first device sends the third frame to the second device may be any one of the following:
Implementation 1: When an operating mode switch duration indication in the first field is a first value, the first device sends the third frame to the second device after operating mode switching is completed. The first value may be 0. For example, when an operating mode switch duration indication subfield included in the first field in the first frame is set to 0, it indicates that the first field does not carry operating mode switch duration of the first device, and after completing operating mode switching, the first device may send the third frame to the second device, to indicate the second device to deliver data.
Implementation 2: When operating mode switch duration of the first device is greater than time in an operating mode switch duration indication in the first field, the first device sends the third frame to the second device after completing operating mode switching. A first device that does not support fast channel switching has long operating mode switch time, and cannot complete operating mode switching based on time in operating mode switch duration indication in a first field. After completing operating mode switching, the first device may send a third frame to the second device, to indicate that operating mode switching is completed, to indicate the second device to deliver data.

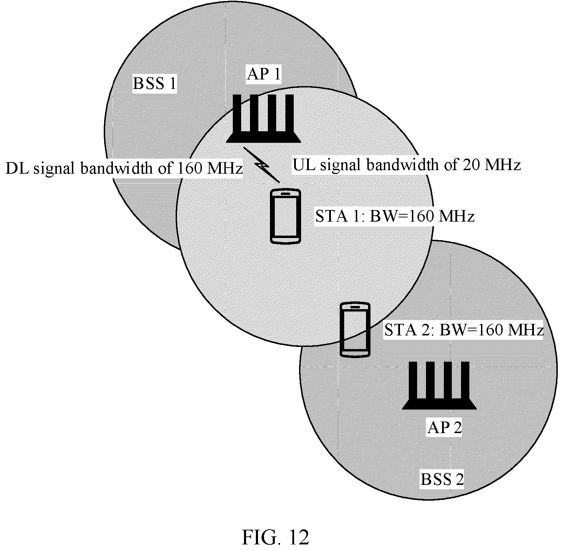

Further, the first device may select an original signal bandwidth or a signal bandwidth after switching to send the third frame to the second device, to reduce co-channel interference caused by an uplink signal at the first device to a neighboring user. For example, FIG. 12 is a diagram of a scenario in which a first device sends a third frame. As shown in FIG. 12, a channel bandwidth BW=160 MHz of the first device STA 1 after switching is the same as a channel bandwidth of a STA 2. The first device STA 1 may select the channel bandwidth BW=160 MHz after switching and the original signal bandwidth SW=20 MHz to send the third frame to a second device AP 1, to reduce impact on data transmission of the STA 2.

The first device uses the third frame to indicate that operating mode switching is completed, to implement efficient and reliable service transmission, resolve a problem that the first device cannot notify the second device of a switching state or switching completion time of a current operating mode, and prevent a throughput decrease and a transmission latency increase due to frequent data packet retransmission, a packet loss, or the like caused by the AP possibly delivering data in advance.

In a possible implementation, if the first device and the second device have negotiated, within a current TXOP, switch time for the first device to switch from the first operating mode to the second operating mode (refer to the steps S501 and S502), the first device may no longer send the third frame to the second device.

S509: Perform data transmission between the first device and the second device.

For example, the second device may deliver data to the first device. An implementation in which the second device delivers data to the first device may be any one of the following:
Implementation 1: After receiving the third frame from the first device, the second device delivers data to the first device. Specifically, in a possible implementation, after receiving the third frame, the second device may immediately deliver data to the first device based on the operating mode after switching. In a possible implementation, after receiving the third frame, the second device delivers data to the first device at specific interframe space (SIFS) based on the operating mode after switching. In a possible implementation, after the second device receives the third frame, the first device sends, to the second device, a request message for requesting data delivery, and after receiving the request message, the second device delivers data to the first device based on the operating mode after switching. In a possible implementation, after the second device receives the third frame, the first device sends, to the second device, a request frame (request frame) for requesting data delivery, and after receiving the request frame, the second device replies to the first device with a response frame (response frame) in response to the request frame, and delivers data to the first device based on the operating mode after switching. In a possible implementation, if the second device fails to receive the third frame and/or a request frame for requesting data delivery within a preset time, the second device delivers data to the first device based on the operating mode before switching.
Implementation 2: When the operating mode switch duration indication in the first field is a second value, the second device delivers data to the first device after time in the operating mode switch duration indication. For example, when the operating mode switch duration indication subfield included in the first field in the first frame is set to 1, the switch duration subfield included in the first field indicates the operating mode switch time of the first device, and the second device may deliver data to the first device after the time.
Implementation 3: The first device delivers data to the second device after the switch time that is negotiated before the TXOP and that is for the first device to switch from the first operating mode to the second operating mode.

The second device may determine, based on the received operating mode switch duration indication in the third frame or the first field or based on the negotiated switch time for the first device to switch from the first operating mode to the second operating mode, time for delivering data to the first device, to implement the efficient service transmission.

S510: The second device sends a fourth frame to the first device, where the fourth frame indicates that the current TXOP ends. Correspondingly, the first device receives the fourth frame from the second device.

In a possible implementation, the fourth frame may be a CF-end frame.

After delivering data to the first device, the second device may send the fourth frame to end the current TXOP in advance, thereby implementing the efficient service transmission.

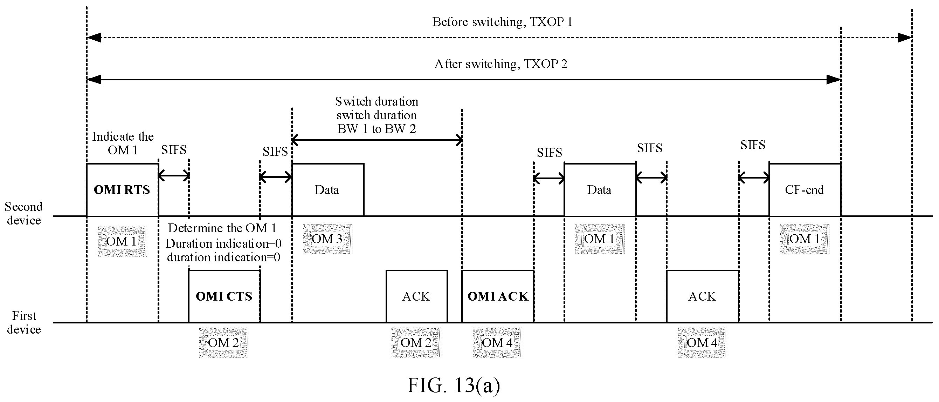

The following describes this embodiment by using an example with reference to the steps S501 to S510. FIG. 13(a) to FIG. 13(f) are diagrams of example descriptions of a communication method according to an embodiment of this application. An example in which a first frame is an OMI CTS frame, a second frame is an OMI RTS frame, a third frame is an OMI ACK frame, a fourth frame is a CF-end frame, and a second device delivers data to a first device may be used for description.

First, operating mode types used in the following example embodiments are described:

| Operating mode type | Channel bandwidth BW | Signal bandwidth SW |
|---|---|---|
| OM 1 | BW1 | SW 1 |
| OM 2 | BW2 | SW 2 |
| OM 3 | BW 1 | SW 2 |
| OM 4 | BW 1 | SW 1 or SW 2 |

As shown in the table, the operating mode types may include an OM 1, an OM 2, an OM 3, and an OM 4. A channel bandwidth and a signal bandwidth corresponding to the OM 1 are respectively the BW 1 and the SW 1. A channel bandwidth and a signal bandwidth corresponding to the OM 2 are respectively the BW 2 and the SW 2. A channel bandwidth and a signal bandwidth corresponding to the OM 3 are respectively the BW 1 and the SW 2. A channel bandwidth and a signal bandwidth corresponding to the OM 4 are respectively the BW 1 and the SW 1 or the SW 2.

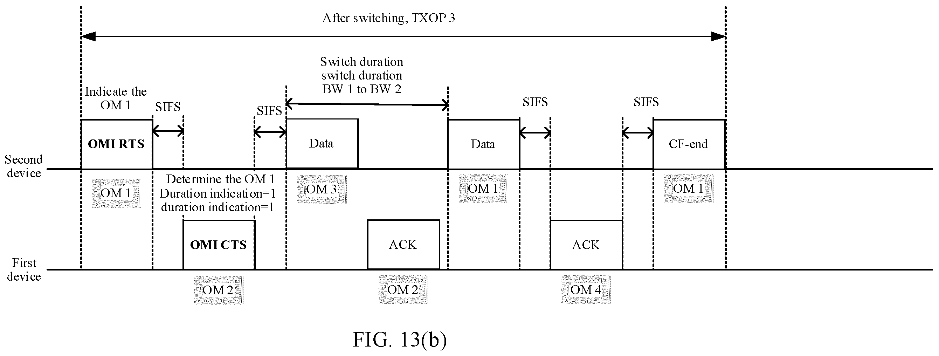

As shown in FIG. 13(a) and FIG. 13(b), the second device actively initiates OM negotiation. Specifically, within a current TXOP, the second device may send, to the first device based on the target operating mode OM 1, the OMI RTS frame for initiating OM negotiation. The OMI RTS may indicate to the first device that a type of the target operating mode is the OM 1, that is, request the first device to switch from the first operating mode OM 2 to the second operating mode OM 1. The OMI RTS frame includes a second field, and the second field is an OM control field or an extended OM control field. The first device may send, in response to the OMI RTS frame, the OMI CTS frame to the second device based on the OM 2 to respond to the OMI RTS frame. The OMI CTS frame includes a first field, the first field is an OM control field or an extended OM control field, and the extended OM control field includes an operating mode switch duration indication (duration indication) subfield.

As shown in FIG. 13(a), when the first field includes the extended OM control field, when the operating mode switch duration indication (duration indication) subfield in the OMI CTS frame is set to 0, after completing operating mode switching, the first device may send the OMI ACK frame to the second device based on the OM 4 (that is, based on an operating mode type before switching or an operating mode type after switching), to indicate that operating mode switching is completed, to indicate the second device to deliver data.

Alternatively, when the first field includes the OM control field, after completing operating mode switching, the first device may send, based on the OM 4, the OMI ACK frame to the second device to indicate that operating mode switching is completed, to indicate the second device to deliver data. During switching of the first device from the first operating mode to the second operating mode, the second device may deliver data to the first device based on the OM 3, and the first device sends, based on the OM 2, an ACK frame to the second device to indicate that the data is received or indicate whether the data is to be resent. During mode switching of the first device, the first device and the second device receive/send data, to improve air interface utilization, and prevent another user from preempting a channel due to long switch time. After specific interframe space (SIFS), the second device may deliver data to the first device based on the OM 1, and the first device sends an ACK frame to the second device based on the OM 4, to indicate that the data is received. The second device may further send the CF-end frame to the first device based on the OM 1, to end the current TXOP in advance. It can be seen from FIG. 13(a) that, a TXOP 2 after operating mode switching of the first device is shorter than a TXOP 1 before operating mode switching, thereby improving data transmission efficiency.

As shown in FIG. 13(b), when the first field includes the extended OM control field, when the operating mode switch duration indication (duration indication) subfield in the OMI CTS frame is set to 1, the first device may complete operating mode switching at time (that is, switch duration (switch duration)) in the switch duration (switch duration) indication included in the first field, and may not send the OMI ACK frame to the second device. The second device may determine, based on the time in the switch duration (switch duration) indication, that the first device has completed operating mode switching, and may deliver data to the first device based on the OM 1. The first device sends an ACK frame to the second device based on the OM 4, to indicate that the data is received. During switching of the first device from the first operating mode to the second operating mode, the second device may deliver data to the first device based on the OM 3, and the first device sends, based on the OM 2, an ACK frame to the second device to indicate that the data is received or indicate whether the data is to be resent. During mode switching of the first device, the first device and the second device receive/send data, to improve air interface utilization, and prevent another user from preempting a channel due to long switch time. The second device may further send the CF-end frame to the first device based on the OM 1, to end the current TXOP in advance. It can be seen from FIG. 13(b) that, a TXOP 3 after operating mode switching of the first device is shorter than the TXOP 1 before operating mode switching, thereby improving the data transmission efficiency.

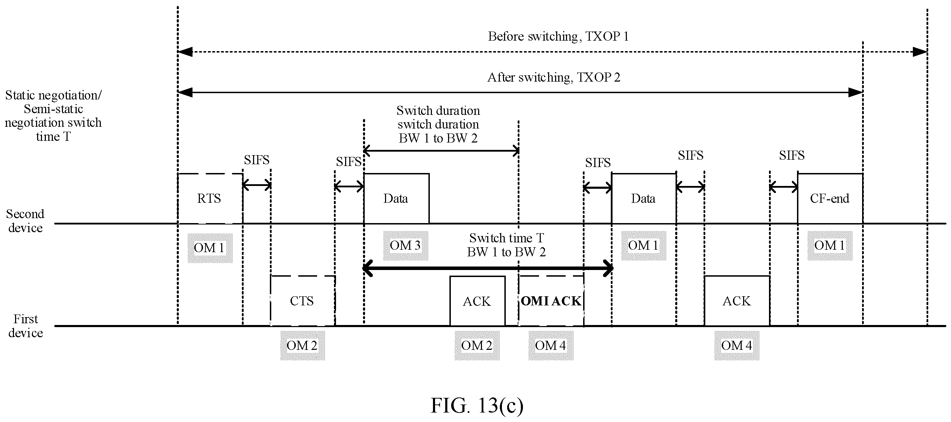

A difference between FIG. 13(c) to FIG. 13(f) and FIG. 13(a) and FIG. 13(b) lies in that: in FIG. 13(a) and FIG. 13(b), the switch time for the first device to switch from the first operating mode to the second operating mode may be negotiated within the current TXOP, and in FIG. 13(c) to FIG. 13(f), switch time for the first device to switch from a first operating mode to a second operating mode may be negotiated outside a current TXOP. Details are as follows.

In a possible implementation, as shown in FIG. 13(c), before the current TXOP starts, the first device and the second device may statically negotiate switch time for the first device to switch from the first operating mode to the second operating mode. For example, the switch time for the first device to switch from the first operating mode to the second operating mode, for example, switch time T, may be specified in a protocol or predefined. In the current TXOP, optionally, the second device may send an RTS frame to the first device based on the OM 1, and the first device sends a CTS frame to the second device based on the OM 2. The first device may start switching from the first operating mode to the second operating mode based on the switch time T. After mode switching is completed, optionally, the first device may send the OMI ACK frame to the second device based on the OM 4, to indicate that operating mode switching is completed, to indicate the second device to deliver data. After receiving the OMI ACK frame or after the switch time T, the second device starts delivering data to the first device at specific interframe space (SIFS) based on the OM 1. The first device sends an ACK frame to the second device based on the OM 4, to indicate that the data is received. During switching of the first device from the first operating mode to the second operating mode, the second device may deliver data to the first device based on the OM 3, and the first device sends, based on the OM 2, an ACK frame to the second device to indicate that the data is received or indicate whether the data is to be resent. During mode switching of the first device, the first device and the second device receive/send data, to improve air interface utilization, and prevent another user from preempting a channel due to long switch time. The second device may further send the CF-end frame to the first device based on the OM 1, to end the current TXOP in advance. It can be seen from FIG. 13(c) that, a TXOP 2 after operating mode switching of the first device is shorter than a TXOP 1 before operating mode switching, thereby improving the data transmission efficiency.

In a possible implementation, which is not shown in FIG. 13(a) to FIG. 13(f), before the current TXOP starts, the first device and the second device may semi-statically negotiate switch time for the first device to switch from the first operating mode to the second operating mode. For example, in a process in which the first device accesses the second device, an association frame for access interaction (for example, the following seventh frame and eighth frame) may carry the switch time for the first device to switch from the first operating mode to the second operating mode, for example, the switch time T. An implementation within the current TXOP is the same as that in FIG. 13(c). For a specific description, refer to FIG. 13(c), and details are not described herein again.

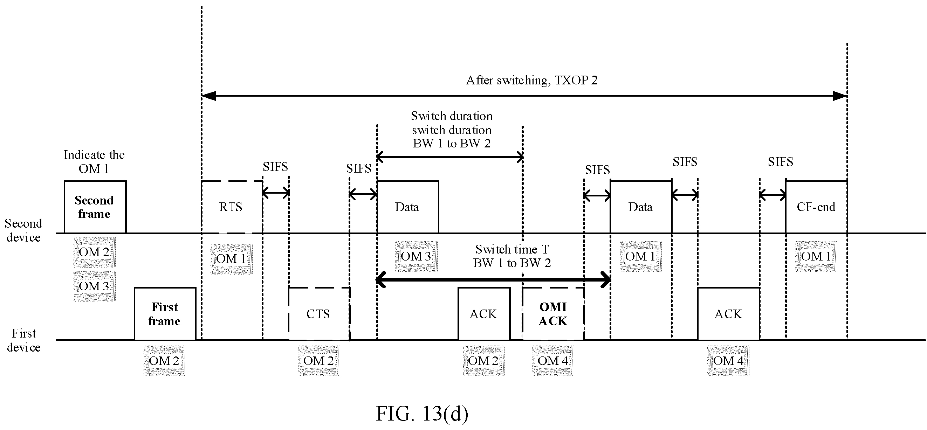

In a possible implementation, as shown in FIG. 13(d), before the current TXOP starts, the first device and the second device may dynamically negotiate switch time for the first device to switch from the first operating mode to the second operating mode. For example, the second device sends, to the first device based on the OM 2 or the OM 3, the second frame for initiating OM negotiation, and the second frame may indicate to the first device that a type of a target operating mode is the OM 1, that is, request the first device to switch from the first operating mode OM 2 to the second operating mode OM 1. The second frame includes a second field, and the second field is an OM control field or an extended OM control field. The first device may send, in response to the second frame, the first frame to the second device based on the OM 2. The first frame includes a first field, the first field is an extended OM control field, and the extended OM control field includes an operating mode switch duration indication (duration indication) subfield. The operating mode switch duration indication (duration indication) subfield indicates switch time T. An implementation within the current TXOP is the same as that in FIG. 13(c). For a specific description, refer to FIG. 13(c), and details are not described herein again.

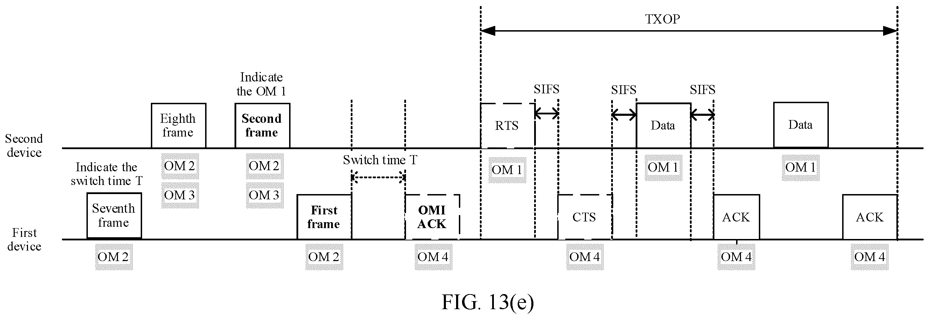

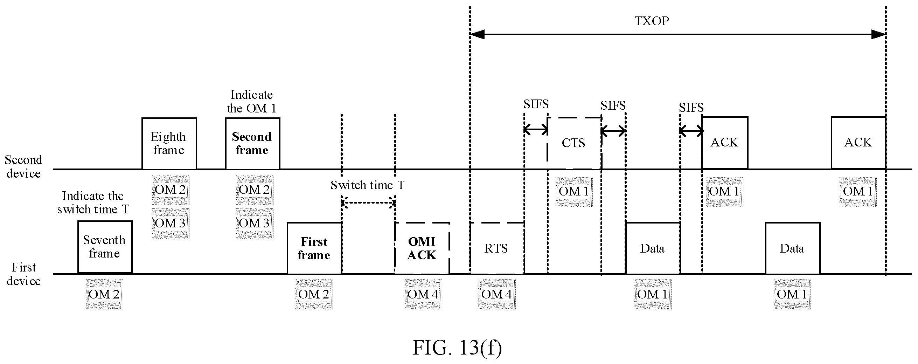

A difference between FIG. 13(e) and FIG. 13(f) and FIG. 13(c) and FIG. 13(d) lies in that: in FIG. 13(c) and FIG. 13(d), the first device may switch from the first operating mode to the second operating mode within the current TXOP. In FIG. 13(e) and FIG. 13(f), the first device may switch from the first operating mode to the second operating mode outside the current TXOP. Details are as follows.

In a first possible implementation, as shown in FIG. 13(e), before the current TXOP starts, the first device and the second device may semi-statically negotiate switch time for the first device to switch from the first operating mode to the second operating mode. Specifically, the first device may send the seventh frame to the second device based on the OM 2, where the seventh frame indicates switch time T, and the second device sends the eighth frame to the first device based on the OM 2 or the OM 3, to respond to the seventh frame. The second device may send, to the first device based on the OM 2 or the OM 3, the second frame for initiating OM negotiation. The second frame may indicate to the first device that a type of a target operating mode is the OM 1, that is, request the first device to switch from the first operating mode OM 2 to the second operating mode OM 1. The second frame includes a second field, and the second field is an OM control field or an extended OM control field. The first device may send, in response to the second frame, the first frame to the second device based on the OM 2. The first frame includes a first field, and the first field is an OM control field. After sending the first frame to the second device, the first device completes switching from the first operating mode to the second operating mode within the switch time T. After mode switching is completed, optionally, the first device may send, based on the OM 4, the OMI ACK frame to the second device to indicate that operating mode switching is completed, to indicate the second device to deliver data. Before the TXOP, the first device completes operating mode switching. Within the current TXOP, optionally, the second device may send an RTS frame based on the OM 1, and the first device may send a CTS frame based on the OM 4, to perform data interaction. After specific interframe space (SIFS), the second device starts periodically delivering data to the first device based on the OM 1, and the first device sends an ACK frame to the second device based on the OM 4, to indicate that the data is received, until the current TXOP ends. It can be learned from this implementation that the first device completes operating mode switching before the current TXOP, and data transmission is performed within the current TXOP using the operating mode after switching, thereby improving the data transmission efficiency.

In a second possible implementation, which is not shown in FIG. 13(a) to FIG. 13(f), before the current TXOP starts, the first device and the second device may statically negotiate switch time for the first device to switch from the first operating mode to the second operating mode. For a specific description, refer to the foregoing description. The first device completes operating mode switching before the current TXOP, and data transmission is performed within the current TXOP using the operating mode after switching. A specific description is the same as that of the first possible implementation. Refer to the first possible implementation. Details are not described herein again.

A difference between FIG. 13(f) and FIG. 13(e) lies in that: FIG. 13(e) is a diagram of downlink data transmission, and FIG. 13(f) is a diagram of uplink data transmission.

In a third possible implementation, as shown in FIG. 13(f), before the current TXOP starts, the first device and the second device may semi-statically negotiate switch time for the first device to switch from the first operating mode to the second operating mode. The first device completes operating mode switching before the current TXOP. A specific description is the same as that of the first possible implementation. Refer to the first possible implementation. Details are not described herein again. Within the current TXOP, optionally, the first device may send an RTS frame based on the OM 4, and after specific interframe space (SIFS), the second device may send a CTS frame based on the OM 1, to perform data interaction. After specific interframe space (SIFS), the first device starts periodically sending data to the first device based on the OM 1, and the second device sends an ACK frame to the first device based on the OM 1, to indicate that the data is received, until the current TXOP ends. It can be seen from FIG. 13(f) that the first device completes operating mode switching before the current TXOP, and data transmission is performed within the current TXOP using the operating mode after switching, thereby improving the data transmission efficiency.

It should be understood that sequence numbers of the foregoing processes do not mean execution sequences in this embodiment. The execution sequences of the processes should be determined based on functions and internal logic of the processes, and should not be construed as any limitation on the implementation processes of embodiments of this application.

In this embodiment, the second device may actively initiate OM negotiation to the first device. For example, the second device may actively initiate OM negotiation to the first device based on information such as an amount of to-be-transmitted data of a service of the second device, a latency requirement, and a channel state, thereby improving flexibility of operating mode switching negotiation. In addition, when the second device initiates downlink data transmission, the first device may not sense an amount of data transmitted at the second device, and the first device may only respond to the second frame from the second device, and implement operating mode switching, thereby improving timeliness of operating mode switching of the first device and reducing latency of operating mode switching.

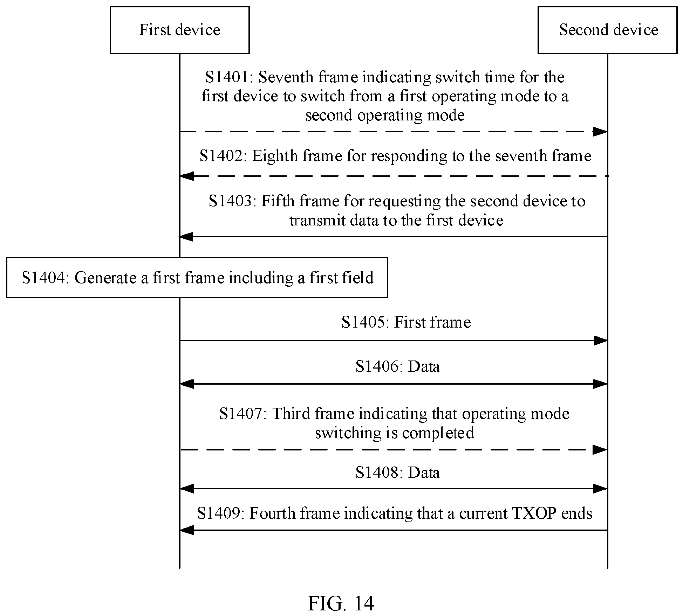

The following describes another communication method provided in an embodiment of this application. It should be understood that, for explanations of terms in different embodiments of this application, reference may be made to each other. To avoid redundant descriptions, a same term may not be described in different embodiments. FIG. 14 is an interaction flowchart of still another communication method according to an embodiment of this application. As shown in FIG. 14, the communication method includes but is not limited to the following steps. Steps S1401, S1402, and S1407 are optional.

S1401: A first device sends, to a second device, a seventh frame indicating switch time for the first device to switch from a first operating mode to a second operating mode. Correspondingly, the second device receives the seventh frame from the first device.

S1402: The second device sends, to the first device, an eighth frame for responding to the seventh frame. Correspondingly, the first device receives the eighth frame from the second device.

It may be understood that, for specific implementations of the steps S1401 and S1402, refer to the steps S501 and S502. Details are not described herein again.

S1403: The second device sends a fifth frame to the first device, where the fifth frame is for requesting the second device to transmit data to the first device. Correspondingly, the first device receives the fifth frame from the second device.

The fifth frame may be understood as an RTS frame that does not include a second field, that is, a regular (regular) RTS frame, for requesting the second device to transmit data to the first device.

S1404: The first device generates a first frame including a first field, where the first field includes an operating mode parameter.

After receiving the fifth frame from the second device, the first device may generate the first frame. For a specific implementation, refer to the step S505. Details are not described herein again.

S1405: The first device sends the first frame to the second device. Correspondingly, the second device receives the first frame from the first device.

The first device may send the first frame to the second device to actively initiate OM negotiation.

An implementation in which the first device sends the first frame to the second device may be any one of the following:
Implementation 1: The first device may estimate, based on the fifth frame, an amount of data to be transmitted by the second device, to independently determine whether to initiate OM negotiation, that is, independently determine whether to send the first frame to the second device. For example, when a TXOP is greater than or equal to a fourth threshold, the first device may send the first frame to the second device within the current TXOP.
Implementation 2: When time in a TXOP duration (duration) indication in the fifth frame exceeds a preset threshold (threshold, TH), the first device may send the first frame to the second device within the current TXOP, and actively initiate OM negotiation.

The first device may actively initiate OM negotiation to the second device within a TXOP, and implement operating mode switching, thereby improving timeliness of operating mode switching of the first device, and reducing latency of operating mode switching.

S1406: During switching of the first device from the first operating mode to the second operating mode (switch duration), perform data transmission between the first device and the second device.

S1407: The first device sends, to the second device, a third frame indicating that operating mode switching is completed. Correspondingly, the second device receives the third frame from the first device.

It may be understood that, for specific implementations of the steps S1406 and S1407, refer to the steps S507 and S508. Details are not described herein again.

S1408: Perform data transmission between the first device and the second device.

S1409: The second device sends a fourth frame to the first device, where the fourth frame indicates that the current TXOP ends. Correspondingly, the first device receives the fourth frame from the second device.

It may be understood that, for specific implementations of the steps S1408 and S1409, refer to the steps S509 and S510. Details are not described herein again.

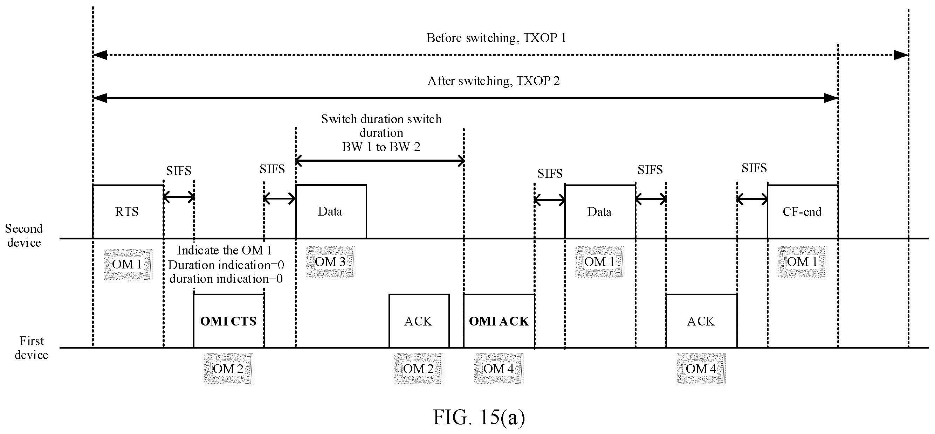

The following describes this embodiment by using an example with reference to the steps S1401 to S1409. FIG. 15(a) to FIG. 15(c) are diagrams of example descriptions of another communication method according to an embodiment of this application. An example in which a first frame is an OMI CTS frame, a third frame is an OMI ACK frame, a fourth frame is a CF-end frame, a fifth frame is an RTS frame, and a second device delivers data to a first device may be used for description.

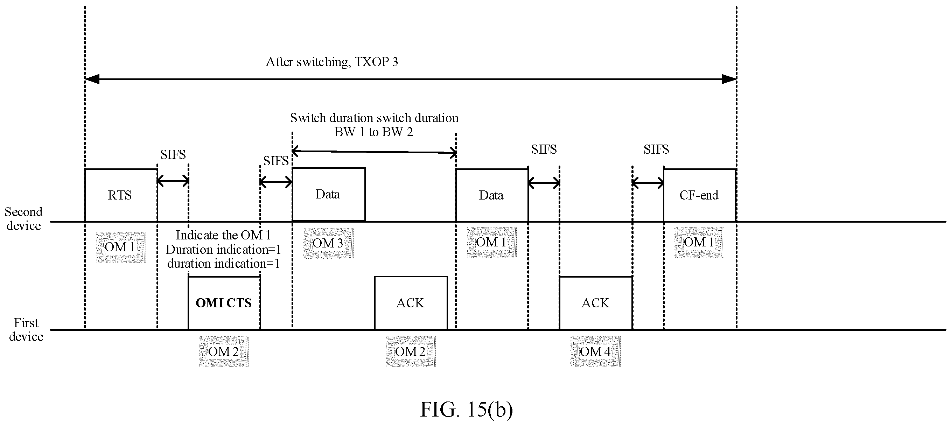

As shown in FIG. 15(a) and FIG. 15(b), within a current TXOP, the second device may send, to the first device based on the target operating mode OM 1, the RTS frame for requesting the first device to transmit data to the second device, and the first device may send, to the second device based on the fifth frame and the OM 2, the OMI CTS frame for initiating OM negotiation. The OMI CTS frame includes a first field, the first field is an OM control field or an extended OM control field, and the extended OM control field includes an operating mode switch duration indication (duration indication) subfield.

As shown in FIG. 15(a), when the first field includes the extended OM control field, when the operating mode switch duration indication (duration indication) subfield in the OMI CTS frame is set to 0, after completing operating mode switching, the first device may send the OMI ACK frame to the second device based on the OM 4, to indicate that operating mode switching is completed, to indicate the second device to deliver data.

Alternatively, when the first field includes the OM control field, after completing operating mode switching, the first device may send, based on the OM 4, the OMI ACK frame to the second device to indicate that operating mode switching is completed, to indicate the second device to deliver data. During switching of the first device from a first operating mode to a second operating mode, the second device may deliver data to the first device based on the OM 3, and the first device sends, based on the OM 2, an ACK frame to the second device to indicate that the data is received or indicate whether the data is to be resent. During mode switching of the first device, the first device and the second device receive/send data, to improve air interface utilization, and prevent another user from preempting a channel due to long switch time. The second device may deliver data to the first device based on the OM 1 after a specific time interval (SIFS). The first device sends an ACK frame to the second device based on the OM 4, to indicate that the data is received. The second device may further send the CF-end frame to the first device based on the OM 1, to end the current TXOP in advance. It can be seen from FIG. 15(a) that, a TXOP 2 after operating mode switching of the first device is shorter than a TXOP 1 before operating mode switching, thereby improving data transmission efficiency.

As shown in FIG. 15(b), when the first field includes the extended OM control field, when the operating mode switch duration indication (duration indication) subfield in the OMI CTS frame is set to 1, the first device may complete operating mode switching at time (that is, switch duration (switch duration)) in the switch duration (switch duration) indication included in the first field, and may not send the OMI ACK frame to the second device. The second device may determine, based on the time in the switch duration (switch duration) indication, that the first device has completed operating mode switching, and may deliver data to the first device based on the OM 1. The first device sends an ACK frame to the second device based on the OM 4, to indicate that the data is received. During switching of the first device from a first operating mode to a second operating mode, the second device may deliver data to the first device based on the OM 3, and the first device sends, based on the OM 2, an ACK frame to the second device to indicate that the data is received or indicate whether the data is to be resent. During mode switching of the first device, the first device and the second device receive/send data, to improve air interface utilization, and prevent another user from preempting a channel due to long switch time. The second device may further send the CF-end frame to the first device based on the OM 1, to end the current TXOP in advance. It can be seen from FIG. 15(b) that, a TXOP 3 after operating mode switching of the first device is shorter than the TXOP 1 before operating mode switching, thereby improving the data transmission efficiency.

In addition, similar to FIG. 13(c) to FIG. 13(f), the first device and the second device may negotiate, outside the current TXOP, switch time for the first device to switch from the first operating mode to the second operating mode. For a specific implementation, refer to the descriptions in FIG. 13(c) to FIG. 13(f). Details are not described again.

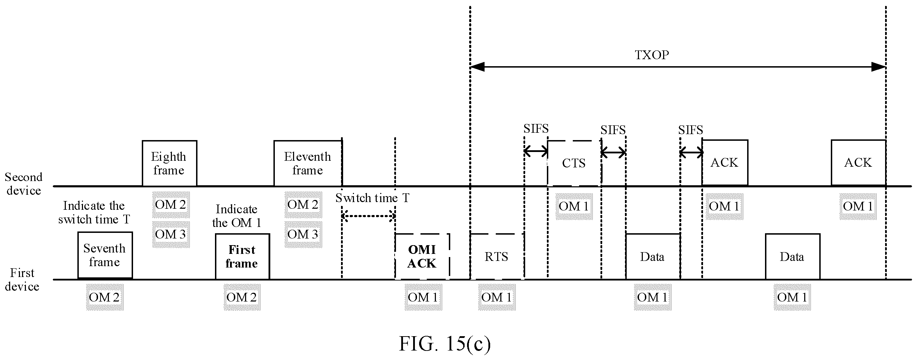

It can be seen by using FIG. 13(f) as an example corresponding to FIG. 15(c) that in FIG. 13(f), the second device actively initiates OM negotiation, and in FIG. 15(c), the first device actively initiates OM negotiation. Specifically, before a current TXOP starts, the first device and the second device may semi-statically negotiate switch time for the first device to switch from a first operating mode to a second operating mode. The first device may send a seventh frame to the second device based on the OM 2, where the seventh frame indicates switch time T, and the second device sends an eighth frame to the first device based on the OM 2 or the OM 3, to respond to the seventh frame. The first device may send, to the second device based on the OM 2, the first frame for initiating OM negotiation. The second device sends, in response to the first frame, an eleventh frame to the first device based on the OM 2 or the OM 3. The eleventh frame may be a management frame, an action frame, or the like. The first frame includes a first field, the first field is an OM control field or an extended OM control field, and the extended OM control field includes an operating mode switch duration indication (duration indication) subfield. After sending the first frame to the second device, the first device completes switching from the first operating mode to the second operating mode within the switch time T. After mode switching is completed, optionally, the first device may send, based on the OM 1, the OMI ACK frame to the second device to indicate that operating mode switching is completed. Before the TXOP, the first device completes operating mode switching. Within the current TXOP, optionally, the first device may send an RTS frame based on the OM 1, and the second device may send a CTS frame based on the OM 1, to perform data interaction. After specific interframe space (SIFS), the first device starts periodically sending data to the second device based on the OM 1, and the first device sends an ACK frame to the second device based on the OM 1, to indicate that the data is received, until the current TXOP ends. It can be learned from this implementation that the first device completes operating mode switching before the current TXOP, and data transmission is performed within the current TXOP using the operating mode after switching, thereby improving the data transmission efficiency.

It should be understood that sequence numbers of the foregoing processes do not mean execution sequences in this embodiment. The execution sequences of the processes should be determined based on functions and internal logic of the processes, and should not be construed as any limitation on the implementation processes of embodiments of this application.

In this embodiment, the first device may actively initiate OM negotiation to the second device. For example, the first device may actively initiate OM negotiation to the first device based on the received fifth frame, thereby improving flexibility of operating mode switching negotiation, improving timeliness of operating mode switching of the first device, and reducing latency of operating mode switching.

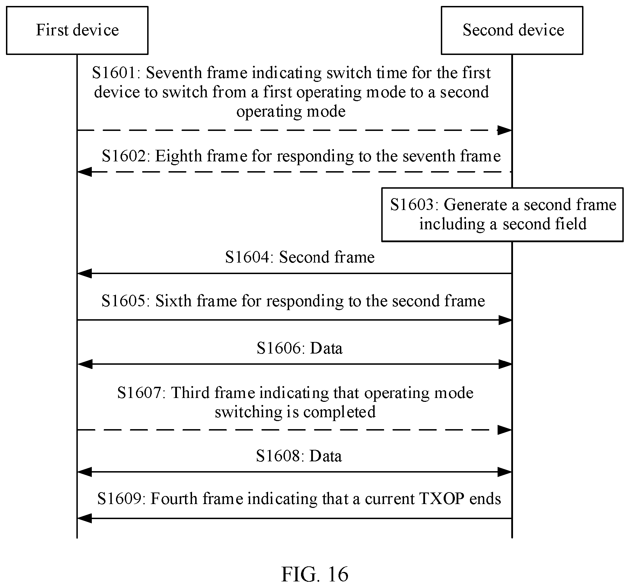

The following describes still another communication method provided in an embodiment of this application. It should be understood that, for explanations of terms in different embodiments of this application, reference may be made to each other. To avoid redundant descriptions, a same term may not be described in different embodiments. FIG. 16 is an interaction flowchart of still another communication method according to an embodiment of this application. As shown in FIG. 16, the communication method includes but is not limited to the following steps. Steps S1601, S1602, and S1607 are optional.

S1601: A first device sends, to a second device, a seventh frame indicating switch time for the first device to switch from a first operating mode to a second operating mode. Correspondingly, the second device receives the seventh frame from the first device.

S1602: The second device sends, to the first device, an eighth frame for responding to the seventh frame. Correspondingly, the first device receives the eighth frame from the second device.

It may be understood that, for specific implementations of the steps S1601 and S1602, refer to the steps S501 and S502. Details are not described herein again.

S1603: The second device generates the second frame including a second field, where the second frame is for initiating operating mode negotiation, and the second field is for recommending an operating mode negotiation parameter.

S1604: The second device sends the second frame to the first device. Correspondingly, the first device receives the second frame from the second device.

It may be understood that, for specific implementations of the steps S1603 and S1604, refer to the steps S503 and S504. Details are not described herein again.

S1605: The first device sends a sixth frame to the second device, where the sixth frame is for responding to the second frame. Correspondingly, the second device receives the sixth frame from the first device.

The sixth frame may be understood as a CTS frame that does not include a first field, that is, a regular (regular) CTS frame, and that is for responding to the second frame.

S1606: During switching of the first device from the first operating mode to the second operating mode (switch duration), perform data transmission between the first device and the second device.

It may be understood that, for a specific implementation of the step S1606, refer to the step S507. Details are not described herein again.

S1607: The first device sends, to the second device, a third frame indicating that operating mode switching is completed. Correspondingly, the second device receives the third frame from the first device.

It may be understood that, for a specific implementation of the third frame, refer to the step S508. Details are not described herein again.

In a possible implementation, after operating mode switching based on the operating mode parameter indicated by the second frame, the first device may send the third frame to the second device.

Further, the first device may select an original signal bandwidth or a signal bandwidth after switching to send the third frame to the second device, to reduce co-channel interference caused by an uplink signal at the first device to a neighboring user.

S1608: Perform data transmission between the first device and the second device.

For example, the second device may deliver data to the first device. An implementation in which the second device delivers data to the first device may be any one of the following:
Implementation 1: After receiving the third frame from the first device, the second device delivers data to the first device.
   Specifically, in a possible implementation, after receiving the third frame, the second device may immediately deliver data to the first device based on the operating mode after switching. In a possible implementation, after receiving the third frame, the second device delivers data to the first device at specific interframe space (SIFS) based on the operating mode after switching. In a possible implementation, after the second device receives the third frame, the first device sends, to the second device, a request message for requesting data delivery, and after receiving the request message, the second device delivers data to the first device based on the operating mode after switching. In a possible implementation, after the second device receives the third frame, the first device sends, to the second device, a request frame (request frame) for requesting data delivery, and after receiving the request frame, the second device replies to the first device with a response frame (response frame) in response to the request frame, and delivers data to the first device based on the operating mode after switching. In a possible implementation, if the second device fails to receive the third frame and/or a request frame for requesting data delivery within a preset time, the second device delivers data to the first device based on the operating mode before switching.
Implementation 2: After receiving the sixth frame from the first device, the second device delivers data to the first device. Specifically, in a possible implementation, after receiving the sixth frame, the second device immediately delivers data to the first device based on the operating mode after switching. In a possible implementation, after receiving the sixth frame, the second device delivers data to the first device at specific interframe space (SIFS) based on the operating mode after switching. In a possible implementation, after receiving the sixth frame, the second device delivers data to the first device after specific preset time (for example, operating mode switch time of the first device agreed between the first device and the second device) based on the operating mode after switching.

S1609: The second device sends a fourth frame to the first device, where the fourth frame indicates that the current TXOP ends. Correspondingly, the first device receives the fourth frame from the second device.

It may be understood that, for a specific implementation of the step S1609, refer to the step S510. Details are not described herein again.

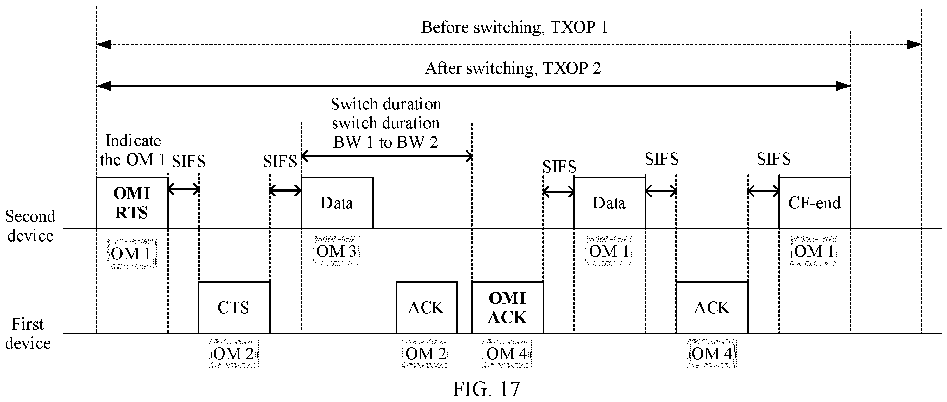

The following describes this embodiment by using an example with reference to the steps S1601 to S1609. FIG. 17 is a diagram of an example description of a communication method according to an embodiment of this application. An example in which a second frame is an OMI RTS frame, a third frame is an OMI ACK frame, a fourth frame is a CF-end frame, a sixth frame is a CTS frame, and a second device delivers data to a first device may be used for description.

As shown in FIG. 17, within a current TXOP, the second device may send, to the first device based on the target operating mode OM 1, the OMI RTS frame for initiating OM negotiation. The OMI RTS may indicate to the first device that a type of the target operating mode is the OM 1, that is, request the first device to switch from a first operating mode OM 2 to a second operating mode OM 1. The OMI RTS frame includes a second field, and the second field is an OM control field or an extended OM control field. The first device receives the OMI RTS frame, and sends the CTS frame to the second device based on the OM 2. The CTS frame is for requesting the second device to transmit data to the first device.

After sending the CTS frame to the second device, the first device starts switching from the first operating mode to the second operating mode after specific interframe space (SIFS). After completing operating mode switching, the first device may send, based on the OM 4 (that is, based on an operating mode type before switching or an operating mode type after switching), the OMI ACK frame to the second device, to indicate that the operating mode switching is completed, to indicate the second device to deliver data. After specific interframe space (SIFS), the second device may deliver data to the first device based on the OM 1, and the first device sends an ACK frame to the second device based on the OM 4, to indicate that the data is received. During switching of the first device from the first operating mode to the second operating mode, the second device may deliver data to the first device based on the OM 3, and the first device sends, based on the OM 2, an ACK frame to the second device to indicate that the data is received or indicate whether the data is to be resent. During mode switching of the first device, the first device and the second device receive/send data, to improve air interface utilization, and prevent another user from preempting a channel due to long switch time. The second device may further send the CF-end frame to the first device based on the OM 1, to end the current TXOP in advance. It can be seen from FIG. 17 that, a TXOP 2 after operating mode switching of the first device is shorter than a TXOP 1 before operating mode switching, thereby improving the data transmission efficiency.

In addition, similar to FIG. 13(c) to FIG. 13(f), the first device and the second device may negotiate, outside the current TXOP, switch time for the first device to switch from the first operating mode to the second operating mode. For a specific implementation, refer to the descriptions in FIG. 13(c) to FIG. 13(f). Details are not described again.

It should be understood that sequence numbers of the foregoing processes do not mean execution sequences in this embodiment. The execution sequences of the processes should be determined based on functions and internal logic of the processes, and should not be construed as any limitation on the implementation processes of embodiments of this application.

In this embodiment, the second device may actively initiate OM negotiation to the first device. For example, the second device may actively initiate OM negotiation to the first device based on information such as an amount of to-be-transmitted data of a service of the second device, a latency requirement, and a channel state, and the first device may send the sixth frame to the second device in response to the OM negotiation, thereby improving flexibility of operating mode switching negotiation.

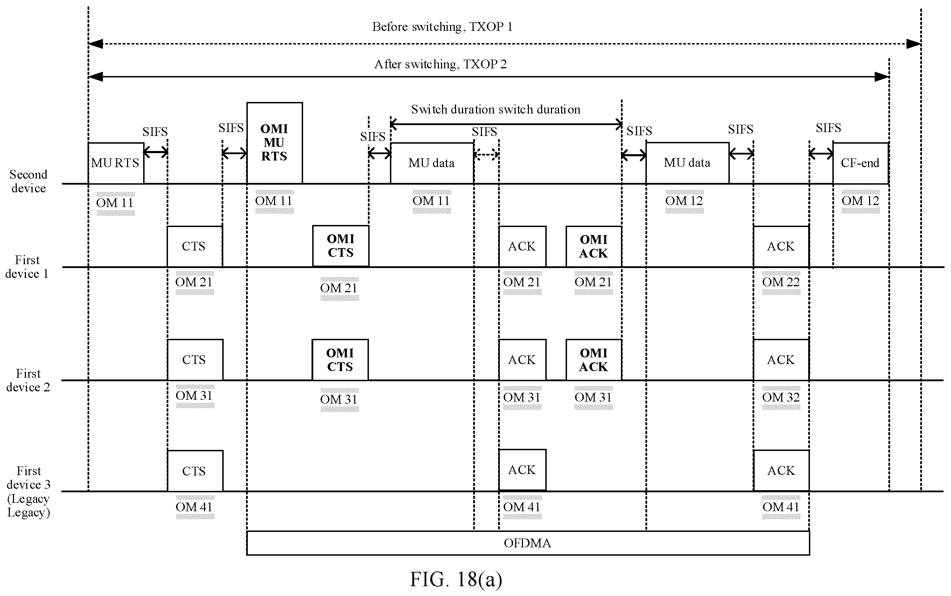

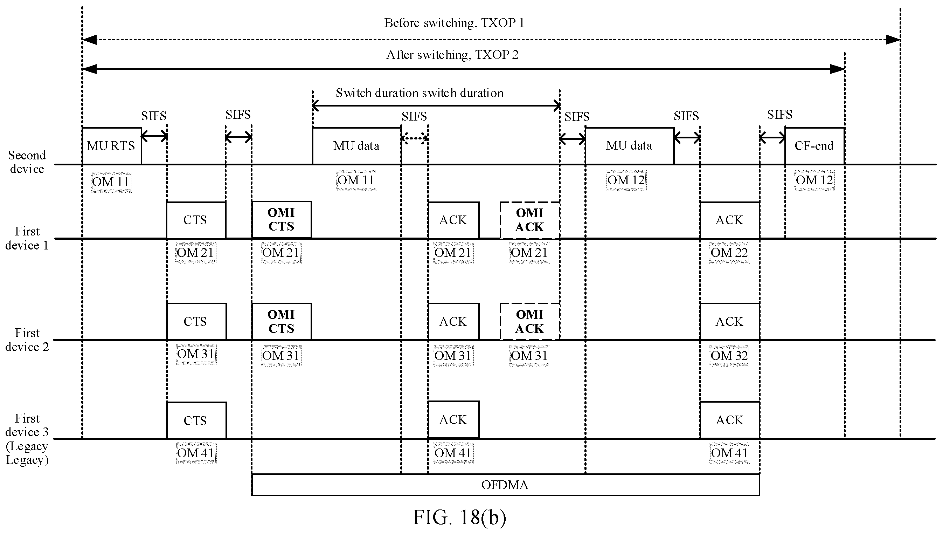

FIG. 5 to FIG. 17 describe a single-user scenario. In a possible implementation, FIG. 18(a) and FIG. 18(b) are diagrams of example descriptions of a communication method in a multi-user scenario according to an embodiment of this application. As shown in FIG. 18(a) and FIG. 18(b), in a multi-user scenario, one second device and a plurality of first devices may be included (FIG. 18(a) and FIG. 18(b) show only three first devices for example description, that is, the plurality of first devices include a first device 1, a first device 2, and a first device 3, where the first device 3 may be a legacy (legacy), and does not support operating mode switching within a current TXOP). An example in which a first frame is an OMI CTS frame, a second frame is an OMI MU RTS frame, a third frame is an OMI ACK frame, and a fourth frame is a CF-end frame may be used for description.

The following first describes operating mode types that are used:

| Operating mode type | Channel bandwidth BW | Signal bandwidth SW |
|---|---|---|
| OM 11 | BW 11 | SW 11 |
| OM 21 | BW 21 | SW 21 |
| OM 31 | BW 31 | SW 31 |
| OM 41 | BW 41 | SW 41 |
| OM 12 (OFDMA) | BW 11 | SW 12 |
| OM 22 (OFDMA) | BW 11 | SW 22 |
| OM 32 (OFDMA) | BW 11 | SW 32 |

As shown in the table, the operating mode types may include the OM 1, the OM 2, the OM 3, the OM 4, the OM 12 (OFDMA), the OM 22 (OFDMA), and the OM 32 (OFDMA). A channel bandwidth and a signal bandwidth corresponding to the OM 1 are respectively the BW 11 and the SW 11. A channel bandwidth and a signal bandwidth corresponding to the OM 21 are respectively the BW 21 and the SW 21. A channel bandwidth and a signal bandwidth corresponding to the OM 3 are respectively the BW 31 and the SW 31. A channel bandwidth and a signal bandwidth corresponding to the OM 4 are respectively the BW 41 and the SW 41. A channel bandwidth and a signal bandwidth corresponding to the OM 12 (OFDMA) are respectively the BW 11 and the SW 12. A channel bandwidth and a signal bandwidth corresponding to the OM 22 (OFDMA) are respectively the BW 11 and the SW 22. A channel bandwidth and a signal bandwidth corresponding to the OM 32 (OFDMA) are respectively the BW 11 and the SW 32.

As shown in FIG. 18(a), the second device may actively initiate operating mode negotiation. Specifically, within the current TXOP, the second device may send a ninth frame to the plurality of first devices based on the OM 11. For example, the ninth frame is a multi-user (muti-user, MU) RTS frame, and the plurality of first devices may respectively send a tenth frame to the second device based on the OM 21, the OM 31, and the OM 41. For example, the tenth frame is a CTS frame. After specific interframe space (SIFS), the second device may send, to the first device 1 and the first device 2 based on the OM 11, the OMI MU RTS frame for initiating OM negotiation. The OMI MU RTS frame may indicate, to the first device 1 and the first device 2, that target operating mode types are the OM 22 and the OM 32, that is, request the first device 1 to switch from the first operating mode OM 21 to the second operating mode OM 22, and request the first device 2 to switch from the first operating mode OM 31 to the second operating mode OM 32. The OMI MU RTS frame includes a second field, and the second field is an OM control field or an extended OM control field. After receiving the OMI MU RTS frame from the second device, the first device 1 and the first device 2 may return the OMI CTS frame to the second device. After specific interframe space (SIFS), the first device 1 and the first device 2 start to perform operating mode switching. During switching of the plurality of first devices from the first operating modes to the second operating modes, the second device may deliver data to the plurality of first devices based on the OM 11. The first device 1 sends, based on the OM 21, an ACK frame to the second device to indicate that the data is received or indicate whether the data is to be resent. The first device 2 sends, based on the OM 331, an ACK frame to the second device to indicate that the data is received or indicate whether the data is to be resent. During mode switching of the first device, the first device and the second device receive/send data, to improve air interface utilization, and prevent another user from preempting a channel due to long switch time. After completing the operating mode switching, the first device 1 and the first device 2 may respectively send the OMI ACK frame to the second device based on the OM 21 and the OM 31, to indicate that operating mode switching is completed, to indicate the second device to deliver data. After specific interframe space (SIFS), the second device may deliver data to the plurality of first devices based on the OM 12. The first device 1 sends an ACK frame to the second device based on the OM 22, the first device 2 sends an ACK frame to the second device based on the OM 32, and the first device 3 sends an ACK frame to the second device based on the OM 41, to indicate that the data is received. The second device may further send the CF-end frame to the plurality of first devices based on the OM 12, to end the current TXOP in advance. It can be seen from FIG. 18(a) that, a TXOP 2 after operating mode switching of the plurality of first devices is shorter than a TXOP 1 before operating mode switching, thereby improving data transmission efficiency.

As shown in FIG. 18(b), the first device may actively initiate operating mode negotiation. Specifically, within the current TXOP, the second device may send an MU RTS frame to the plurality of first devices based on the OM 11, and the plurality of first devices may respectively send a CTS frame to the second device based on the OM 21, the OM 31, and the OM 41. After specific interframe space (SIFS), the first device 1 and the first device 2 may respectively send, to the second device based on the OM 21 and the OM 31, an OMI CTS frame for initiating OM negotiation, and start switching from first operating modes to second operating modes. The OMI CTS frame includes a first field, the first field is an OM control field or an extended OM control field, and the extended OM control field includes an operating mode switch duration indication (duration indication) subfield. During switching of the plurality of first devices from the first operating modes to the second operating modes, the second device may deliver data to the plurality of first devices based on the OM 11. The first device 1 sends, based on the OM 21, an ACK frame to the second device to indicate that the data is received or indicate whether the data is to be resent. The first device 2 sends, based on the OM 331, an ACK frame to the second device to indicate that the data is received or indicate whether the data is to be resent. During mode switching of the first device, the first device and the second device receive/send data, to improve air interface utilization, and prevent another user from preempting a channel due to long switch time.

When the first field includes the OM control field, after completing operating mode switching, the first device 1 and the first device 2 may respectively send the OMI ACK frame to the second device based on the OM 21 and the OM 31, to indicate that operating mode switching is completed, to indicate the second device to deliver data. After receiving the OMI ACK frame, the second device may deliver data to the plurality of first devices based on the OM 12 at specific interframe space (SIFS).

When the first field includes the extended OM control field, after completing operating mode switching, the first device 1 and the second device 2 may not send the OMI ACK frame to the second device. The second device may deliver data to the plurality of first devices based on time in an operating mode switching indication (duration indication) in the extended OM control field.

The second device may deliver data to the plurality of first devices. The first device 1 sends an ACK frame to the second device based on the OM 22, the first device 2 sends an ACK frame to the second device based on the OM 32, and the first device 3 sends an ACK frame to the second device based on the OM 41, to indicate that the data is received. The second device may further send the CF-end frame to the plurality of first devices based on the OM 12, to end the current TXOP in advance. It can be seen from FIG. 18(a) that, a TXOP 2 after operating mode switching of the plurality of first devices is shorter than a TXOP 1 before operating mode switching, thereby improving data transmission efficiency.

In addition, similar to FIG. 13(c) to FIG. 13(f), the first device and the second device may negotiate, outside the current TXOP, switch time for the first device to switch from the first operating mode to the second operating mode. For a specific implementation, refer to the descriptions in FIG. 13(c) to FIG. 13(f). Details are not described again.

It may be understood that when the plurality of first devices perform data interaction with the second device, the plurality of first devices may perform data interaction with the second device through orthogonal frequency division multiple access (orthogonal frequency division multiple access, OFDMA).

The foregoing content describes the methods provided in this application. To better implement the foregoing solutions in embodiments of this application, an embodiment of this application further provides a corresponding apparatus.

In embodiments of this application, the communication apparatus may be divided into functional modules based on the foregoing method examples. For example, each functional module may be obtained through division based on each function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used.

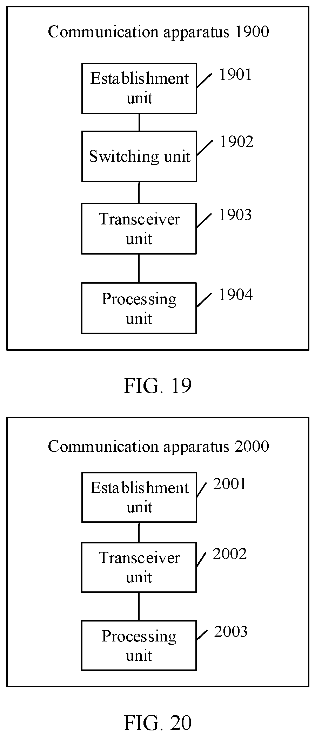

FIG. 19 is a diagram of a structure of a communication apparatus according to an embodiment of this application. The communication apparatus may be a first device, a module (for example, a chip or a processor) in the first device, or a logical module or software that can implement all or some functions of the first device. As shown in FIG. 19, the communication apparatus 1900 includes at least an establishment unit 1901, a switching unit 1902, a transceiver unit 1903, and a processing unit 1904.

The establishment unit 1901 is configured to establish a wireless communication link with a second device, where the first device operates in a first operating mode.

The switching unit 1902 is configured to switch from the first operating mode to a second operating mode.

The transceiver unit 1903 is configured to communicate with the second device.

In an implementation, when a first condition is met, the switching unit 1902 switches from the first operating mode to the second operating mode, and the first condition includes one or more of the following: the first device changes from a listening state to a data transmission state; or an amount of data to be transmitted between the first device and the second device changes from less than or equal to a first threshold to greater than the first threshold.

In an implementation, the first operating mode corresponds to a first bandwidth, and the second operating mode corresponds to a second bandwidth.

In an implementation, the second device operates in a third operating mode, and the third operating mode corresponds to a third bandwidth.

In an implementation, the first bandwidth is less than or equal to the third bandwidth, and the second bandwidth is less than or equal to the third bandwidth.

In an implementation, the switching unit 1902 switches from the first operating mode to the second operating mode, and is specifically configured to: generate a first frame, where the first frame includes a first field, and the first field includes an operating mode parameter; send the first frame to the second device; and switch from the first operating mode to the second operating mode.

In an implementation, the first field includes an operating mode switch duration indication.

In an implementation, the first field further includes a signal bandwidth.

In an implementation, the transceiver unit 1903 is further configured to receive a second frame from the second device, where the second frame includes a second field, the second frame is for initiating operating mode negotiation, and the second field is for recommending an operating mode parameter.

In an implementation, the second field includes an operating mode recommendation indication and/or an operating mode negotiate indication.

In an implementation, the transceiver unit 1903 is further configured to send a seventh frame to the second device before a current TXOP, where the seventh frame indicates switch time for the first device to switch from the first operating mode to the second operating mode.

The transceiver unit 1903 is further configured to receive an eighth frame from the second device, where the eighth frame is for responding to the seventh frame.

In an implementation, the transceiver unit 1903 is further configured to receive a fifth frame from the second device, where the fifth frame is for requesting the second device to transmit data to the first device.

In an implementation, the transceiver unit 1903 sends the first frame to the second device, and is specifically configured to: estimate, based on TXOP duration in the fifth frame, an amount of data to be transmitted at the second device, and when the amount of data to be transmitted at the second device is greater than or equal to a fourth threshold, send the first frame to the second device within the current TXOP.

In an implementation, the transceiver unit 1903 sends the first frame to the second device, and is specifically configured to: when time in a TXOP duration indication in the fifth frame exceeds a preset threshold, send the first frame to the second device within the current TXOP.

In an implementation, the transceiver unit 1903 is further configured to send a sixth frame to the second device, where the sixth frame is for responding to the second frame.

In an implementation, the transceiver unit 1903 is further configured to receive a ninth frame from the second device, where the ninth frame is used by the second device to transmit data to one or more first devices.

The transceiver unit 1903 is further configured to send a tenth frame to the second device, where the tenth frame is for responding to the ninth frame.

In an implementation, the transceiver unit 1903 is further configured to: when the first device switches from the first operating mode to the second operating mode, receive data from the second device.

In an implementation, the transceiver unit 1903 is further configured to send a third frame to the second device, where the third frame indicates that operating mode switching is completed.

In an implementation, the transceiver unit 1903 sends the third frame to the second device, and is specifically configured to: when the operating mode switch duration indication in the first field is a first value, send the third frame to the second device after completing operating mode switching.

In an implementation, the transceiver unit 1903 sends the third frame to the second device, and is specifically configured to: when the operating mode switch duration of the first device is greater than time in the operating mode switch duration indication in the first field, send the third frame to the second device after completing operating mode switching.

In an implementation, the transceiver unit 1903 sends the third frame to the second device, and is specifically configured to select an original signal bandwidth or a signal bandwidth after switching to send the third frame to the second device.

In an implementation, the first frame is a CTS frame or a trigger frame.

In an implementation, the second frame is a request-to-send RTS frame or a trigger frame.

In an implementation, the third frame is an ACK frame.

In an implementation, the fifth frame is an RTS frame.

In an implementation, the communication apparatus further includes:
the processing unit 1904, configured to: prestore PHY layer module calibration data in different operating modes; and
select corresponding PHY layer module calibration data based on the first field, and configure a PHY layer register.

In an implementation, the processing unit 1904 prestores the PHY layer module calibration data in different operating modes, and is specifically configured to prestore PHY layer calibration data in a first bandwidth operating mode, where the first bandwidth is a bandwidth greater than or equal to the first threshold.

The transceiver unit 1903 is further configured to receive/send a signal by using a signal bandwidth less than the first bandwidth after channel switching.

In an implementation, the transceiver unit 1903 is further configured to receive a fourth frame from the second device, where the fourth frame indicates that the TXOP ends.

For more detailed descriptions of the establishment unit 1901, the switching unit 1902, the transceiver unit 1903, and the processing unit 1904, directly refer to the related descriptions of the first device in the method embodiments shown in FIG. 4 to FIG. 18(b). Details are not described herein again.

FIG. 20 is a diagram of a structure of another communication apparatus according to an embodiment of this application. The communication apparatus may be a second device, a module (for example, a chip or a processor) in the second device, or a logical module or software that can implement all or some functions of the second device. As shown in FIG. 20, the communication apparatus 2000 includes at least an establishment unit 2001, a transceiver unit 2002, and a processing unit 2003.

The establishment unit 2001 is configured to establish a wireless communication link with a first device, where the first device operates in a first operating mode.

The transceiver unit 2002 is configured to communicate with the first device based on a second operating mode.

In an implementation, when a first condition is met, the transceiver unit 2002 communicates with the first device based on the second operating mode, and the first condition includes one or more of the following: the first device changes from a listening state to a data transmission state; or an amount of data to be transmitted between the first device and the second device changes from less than or equal to a first threshold to greater than the first threshold.

In an implementation, the first operating mode corresponds to a first bandwidth, and the second operating mode corresponds to a second bandwidth.

In an implementation, the second device operates in a third operating mode, and the third operating mode corresponds to a third bandwidth.

In an implementation, the first bandwidth is less than or equal to the third bandwidth, and the second bandwidth is less than or equal to the third bandwidth.

In an implementation, the transceiver unit 2002 is further configured to receive a first frame from the first device, where the first frame includes a first field, and the first field includes an operating mode parameter.

In an implementation, the first field includes an operating mode switch duration indication.

In an implementation, the first field further includes a signal bandwidth.

In an implementation, the transceiver unit 2002 is further configured to send a second frame to the first device, where the second frame includes a second field, the second frame is for initiating operating mode negotiation, and the second field is for recommending an operating mode parameter.

In an implementation, the second field includes an operating mode recommendation indication and/or an operating mode negotiate indication.

In an implementation, the transceiver unit 2002 sends the second frame to the first device, and is specifically configured to: when an amount of to-be-transmitted data of the second device is greater than or equal to a second threshold, or required transmission time of the to-be-transmitted data is greater than or equal to a third threshold, send the second frame to the first device.

In an implementation, the transceiver unit 2002 is further configured to:
receive a seventh frame from the first device before a current TXOP, where the seventh frame indicates switch time for the first device to switch from the first operating mode to the second operating mode; and
send an eighth frame to the first device, where the eighth frame is for responding to the seventh frame.

In an implementation, the transceiver unit 2002 is further configured to send a fifth frame to the first device, where the fifth frame is for requesting the second device to transmit data to the first device.

In an implementation, the transceiver unit 2002 is further configured to send a sixth frame to the first device, where the sixth frame is for responding to the second frame.

In an implementation, the transceiver unit 2002 is further configured to:
send a ninth frame to the first device, where the ninth frame is used by the second device to transmit data to one or more first devices; and
receive a tenth frame from the first device, where the tenth frame is for responding to the ninth frame.

In an implementation, the transceiver unit 2002 is further configured to: when receiving a first frame from the one or more first devices or fails to receive the first frame from the one or more first devices within a preset time, send data to the one or more first devices.

In an implementation, the transceiver unit 2002 is further configured to: when the first device switches from the first operating mode to the second operating mode, send data to the first device.

In an implementation, the transceiver unit 2002 is further configured to receive a third frame from the first device, where the third frame indicates that operating mode switching is completed.

In an implementation, the transceiver unit 2002 is further configured to: after receiving the third frame from the first device, deliver data to the first device.

In an implementation, the transceiver unit 2002 is further configured to: when the operating mode switch duration indication in the first field is a second value, deliver data to the first device after time in the operating mode switch duration indication.

In an implementation, the first frame is a CTS frame or a trigger frame.

In an implementation, the second frame is an RTS frame or a trigger frame.

In an implementation, the third frame is an ACK frame.

In an implementation, the fifth frame is an RTS frame.

In an implementation, the transceiver unit 2002 is further configured to send a fourth frame to the first device, where the fourth frame indicates that the TXOP ends.

For more detailed descriptions of the establishment unit 2001, the transceiver unit 2002, and the processing unit 2003, directly refer to the related descriptions of the first device in the method embodiments shown in FIG. 4 to FIG. 18(b). Details are not described herein again.

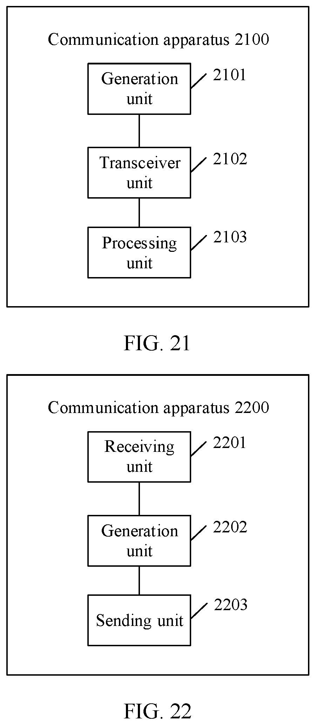

FIG. 21 is a diagram of a structure of still another communication apparatus according to an embodiment of this application. The communication apparatus may be a first device, a module (for example, a chip or a processor) in the first device, or a logical module or software that can implement all or some functions of the first device. As shown in FIG. 21, the communication apparatus 2100 includes at least a generation unit 2101, a transceiver unit 2102, and a processing unit 2103.

The generation unit 2101 is configured to generate a first frame, where the first frame includes a first field, and the first field includes an operating mode parameter.

The transceiver unit 2102 is configured to send the first frame to a second device.

In an implementation, the first field includes an operating mode switch duration indication.

In an implementation, the first field further includes a signal bandwidth.

In an implementation, the communication apparatus 2100 further includes:
the transceiver unit 2102, configured to receive a second frame from the second device, where the second frame includes a second field, the second frame is for initiating operating mode negotiation, and the second field is for recommending an operating mode negotiation parameter.

In an implementation, the second field includes an operating mode recommendation indication and/or an operating mode negotiate indication.

In an implementation, the transceiver unit 2102 is further configured to receive a fifth frame from the second device, where the fifth frame is for requesting the second device to transmit data to the first device.

The transceiver unit 2102 sends the first frame to the second device, and is specifically configured to:
estimate, based on the fifth frame, the amount of data to be transmitted at the second device, and when a TXOP is greater than or equal to a fourth threshold, send the first frame to the second device within the current TXOP.

In an implementation, the transceiver unit 2102 sends the first frame to the second device, and is specifically configured to:
when time in a TXOP duration (duration) indication in the fifth frame exceeds a preset threshold, send the first frame to the second device within the current TXOP.

In an implementation, the transceiver unit 2102 is further configured to send a third frame to the second device, where the third frame indicates that operating mode switching is completed.

In an implementation, the transceiver unit 2102 sends the third frame to the second device, and is specifically configured to:
when the operating mode switch duration indication in the first field is a first value, send the third frame to the second device after operating mode switching is completed.

In an implementation, the transceiver unit 2102 sends the third frame to the second device, and is specifically configured to:
when operating mode switch duration of the first device is greater than time in the operating mode switch duration indication in the first field, send the third frame to the second device after completing operating mode switching.

In an implementation, the transceiver unit 2102 sends the third frame to the second device, and is specifically configured to:
select an original signal bandwidth or a signal bandwidth after switching to send the third frame to the second device.

In an implementation, the first frame is a CTS frame or a trigger frame.

In an implementation, the second frame is an RTS frame or a trigger frame.

In an implementation, the third frame is an ACK frame.

In an implementation, the fifth frame is an RTS frame.

In an implementation, the communication apparatus 2100 further includes:
the processing unit 2103, configured to: prestore PHY layer module calibration data in different operating modes.

The processing unit 2103 is further configured to: select corresponding PHY layer module calibration data based on the first field, and configure a PHY layer register.

In an implementation, the processing unit 2103 prestores the PHY layer module calibration data in different operating modes, and is specifically configured to prestore PHY layer calibration data in a first bandwidth operating mode, where the first bandwidth is a bandwidth greater than or equal to the first threshold.

The transceiver unit 2102 is further configured to receive/send a signal by using a signal bandwidth less than the first bandwidth after channel switching.

In an implementation, the transceiver unit 2102 is further configured to receive a fourth frame from the second device, where the fourth frame indicates that the TXOP ends.

For more detailed descriptions of the generation unit 2101, the transceiver unit 2102, and the processing unit 2103, directly refer to the related descriptions of the first device in the method embodiments shown in FIG. 4 to FIG. 18(b). Details are not described herein again.

FIG. 22 is a diagram of a structure of still another communication apparatus according to an embodiment of this application. The communication apparatus may be a second device, a module (for example, a chip or a processor) in the second device, or a logical module or software that can implement all or some functions of the second device. As shown in FIG. 22, the communication apparatus 2200 includes at least a receiving unit 2201, a generation unit 2202, and a sending unit 2203.

The receiving unit 2201 is configured to receive a first frame from a first device, where the first frame includes a first field, and the first field includes an operating mode parameter.

In an implementation, the first field includes an operating mode switch duration indication.

In an implementation, the first field further includes a signal bandwidth.

In an implementation, the communication apparatus 2200 further includes:
the generation unit 2202, configured to generate a second frame, where the second frame includes a second field, the second frame is for initiating operating mode negotiation, and the second field is for recommending an operating mode parameter; and
the sending unit 2203, configured to send the second frame to the first device.

In an implementation, the second field includes an operating mode recommendation indication and/or an operating mode negotiate indication.

In an implementation, the sending unit 2203 sends the second frame to the first device, and is specifically configured to:
when an amount of to-be-transmitted data of the second device is greater than or equal to a second threshold, or required transmission time of the to-be-transmitted data is greater than or equal to a third threshold, send the second frame to the first device.

In an implementation, the sending unit 2203 is further configured to send a fifth frame to the first device, where the fifth frame is for requesting the second device to transmit data to the first device.

In an implementation, the receiving unit 2201 is further configured to receive a third frame from the first device, where the third frame indicates that operating mode switching is completed.

In an implementation, the sending unit 2203 is further configured to: after receiving the third frame from the first device, deliver data to the first device.

In an implementation, the sending unit 2203 is further configured to: when the operating mode switch duration indication in the first field is a second value, deliver data to the first device after time in the operating mode switch duration indication.

In an implementation, the first frame is a CTS frame or a trigger frame.

In an implementation, the second frame is an RTS frame or a trigger frame.

In an implementation, the third frame is an ACK frame.

In an implementation, the fifth frame is an RTS frame.

In an implementation, the sending unit 2203 is further configured to send a fourth frame to the first device, where the fourth frame indicates that a current TXOP ends.

For more detailed descriptions of the receiving unit 2201, the generation unit 2202, and the sending unit 2203, directly refer to the related descriptions of the second device in the method embodiments shown in FIG. 4 to FIG. 18(b). Details are not described herein again.

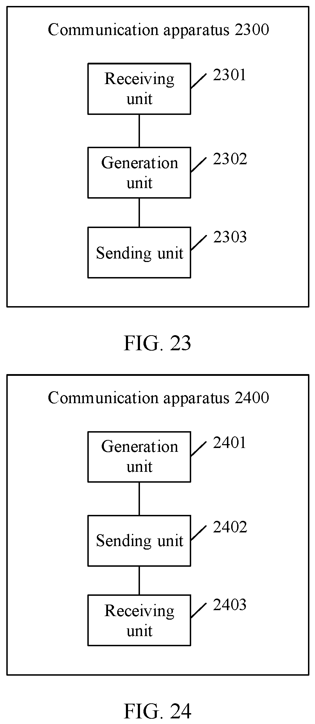

FIG. 23 is a diagram of a structure of still another communication apparatus according to an embodiment of this application. The communication apparatus may be a first device, a module (for example, a chip or a processor) in the first device, or a logical module or software that can implement all or some functions of the first device. As shown in FIG. 23, the communication apparatus 2300 includes at least a receiving unit 2301, a generation unit 2302, and a sending unit 2303.

The receiving unit 2301 is configured to receive a second frame from a second device, where the second frame includes a second field, the second frame is for initiating operating mode negotiation, and the second field is for recommending an operating mode parameter.

In an implementation, the second field includes an operating mode recommendation indication and/or an operating mode negotiate indication.

In an implementation, the communication apparatus 2300 further includes:
the generation unit 2302, configured to generate a first frame, where the first frame includes a first field, and the first field includes an operating mode parameter; and
the sending unit 2303, configured to send the first frame to the second device.

In an implementation, the first field includes an operating mode switch duration indication.

In an implementation, the first field further includes a signal bandwidth.

In an implementation, the sending unit 2303 is further configured to send a sixth frame to the second device, where the sixth frame is for responding to the second frame.

In an implementation, the sending unit 2303 is further configured to send a third frame to the second device, where the third frame indicates that operating mode switching is completed.

In an implementation, the sending unit 2303 sends the third frame to the second device, and is specifically configured to:
when the operating mode switch duration indication in the first field is a first value, send the third frame to the second device after operating mode switching is completed.

In an implementation, the sending unit 2303 sends the third frame to the second device, and is specifically configured to:
when operating mode switch duration of the first device is greater than time in the operating mode switch duration indication in the first field, send the third frame to the second device after completing operating mode switching.

In an implementation, the sending unit 2303 sends the third frame to the second device, and is specifically configured to:
select an original signal bandwidth or a signal bandwidth after switching to send the third frame to the second device.

In an implementation, the first frame is a CTS frame or a trigger frame.

In an implementation, the second frame is an RTS frame or a trigger frame.

In an implementation, the third frame is an ACK frame.

In an implementation, the sixth frame is a CTS frame.

In an implementation, the receiving unit 2301 is further configured to receive a fourth frame from the second device, where the fourth frame indicates that a TXOP ends.

For more detailed descriptions of the receiving unit 2301, the generation unit 2302, and the sending unit 2303, directly refer to the related descriptions of the first device in the method embodiments shown in FIG. 4 to FIG. 18(b). Details are not described herein again.

FIG. 24 is a diagram of a structure of still another communication apparatus according to an embodiment of this application. The communication apparatus may be a second device, a module (for example, a chip or a processor) in the second device, or a logical module or software that can implement all or some functions of the second device. As shown in FIG. 24, the communication apparatus 2400 includes at least a generation unit 2401, a sending unit 2402, and a receiving unit 2403.

The generation unit 2401 is configured to generate a second frame, where the second frame includes a second field, the second frame is for initiating operating mode negotiation, and the second field is for recommending an operating mode parameter.

The sending unit 2402 is configured to send the second frame to a first device.

In an implementation, the second field includes an operating mode recommendation indication and/or an operating mode negotiate indication.

In an implementation, the sending unit 2402 sends the second frame to the first device, and is specifically configured to:
when an amount of to-be-transmitted data of the second device is greater than or equal to a second threshold, or required transmission time of the to-be-transmitted data is greater than or equal to a third threshold, send the second frame to the first device.

In an implementation, the communication apparatus 2400 further includes:
the receiving unit 2403, configured to receive a first frame from the first device, where the first frame includes a first field, and the first field includes an operating mode parameter.

In an implementation, the first field includes an operating mode switch duration indication.

In an implementation, the first field further includes a signal bandwidth.

In an implementation, the receiving unit 2403 is further configured to receive a sixth frame from the first device, where the sixth frame is for responding to the second frame.

In an implementation, the receiving unit 2403 is further configured to receive a third frame from the first device, where the third frame indicates that operating mode switching is completed.

In an implementation, the sending unit 2402 is further configured to: after receiving the third frame from the first device, deliver data to the first device.

In an implementation, the sending unit 2402 is further configured to: when the operating mode switch duration indication in the first field is a second value, deliver data to the first device after time in the operating mode switch duration indication.

In an implementation, the sending unit 2402 is further configured to: after receiving the sixth frame from the first device, deliver data to the first device.

In an implementation, the first frame is a CTS frame or a trigger frame.

In an implementation, the second frame is an RTS frame or a trigger frame.

In an implementation, the third frame is an ACK frame.

In an implementation, the sixth frame is a CTS frame.

In an implementation, the sending unit 2402 is further configured to send a fourth frame to the first device, where the fourth frame indicates that a TXOP ends.

For more detailed descriptions of the generation unit 2401, the sending unit 2402, and the receiving unit 2403, directly refer to the related descriptions of the second device in the method embodiments shown in FIG. 4 to FIG. 18(b). Details are not described herein again.

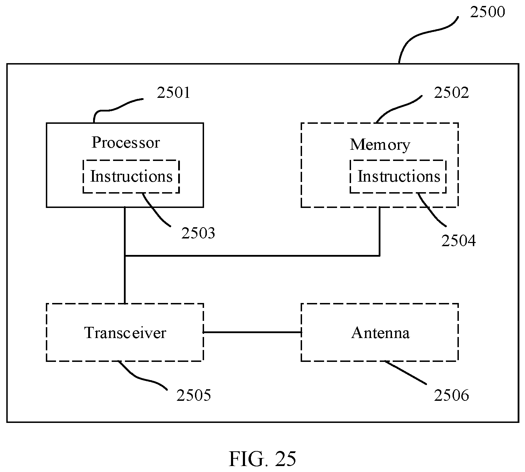

FIG. 25 is a diagram of a structure of still another communication apparatus according to an embodiment of this application. As shown in FIG. 25, the communication apparatus 2500 may include one or more processors 2501. The processor 2501 may also be referred to as a processing unit, and may implement a specific control function. The processor 2501 may be a general-purpose processor or a dedicated processor, for example, a baseband processor or a central processing unit. The baseband processor may be configured to process a communication protocol and communication data. The central processing unit may be configured to: control a communication apparatus (for example, a base station, a baseband chip, a terminal, a terminal chip, a DU, or a CU), execute a software program, and process data of the software program.

In an optional design, the processor 2501 may alternatively store instructions 2503. The instructions 2503 may be executed by the processor, so that the communication apparatus 2500 performs the method described in the foregoing method embodiments.

In another optional design, the processor 2501 may include a transceiver unit configured to implement receiving and sending functions. For example, the transceiver unit may be a transceiver circuit, an interface, an interface circuit, or a communication interface. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

In still another possible design, the communication apparatus 2500 may include a circuit, and the circuit may implement a sending, receiving, or communication function in the foregoing method embodiments.

Optionally, the communication apparatus 2500 may include one or more memories 2502. The memory 2502 may store instructions 2504, and the instructions 2504 may be run on the processor, so that the communication apparatus 2500 performs the method described in the foregoing method embodiments. Optionally, the memory may further store data. Optionally, the processor may also store instructions and/or data. The processor and the memory may be separately disposed, or may be integrated together. For example, the correspondence described in the foregoing method embodiments may be stored in the memory or stored in the processor.

Optionally, the communication apparatus 2500 may further include a transceiver 2505 and/or an antenna 2506. The processor 2501 may be referred to as a processing unit, and controls the communication apparatus 2500. The transceiver 2505 may be referred to as a transceiver unit, a transceiver, a transceiver circuit, a transceiver apparatus, a transceiver module, or the like, and is configured to implement a transceiver function.

Optionally, the communication apparatus 2500 in this embodiment of this application may be configured to perform the method described in FIG. 4 to FIG. 18(b) in this embodiment of this application.

In an embodiment, the communication apparatus 2500 is applicable to a first device, a module (for example, a chip or a processor) in the first device, or a logical module or software that can implement all or some functions of the first device. When the computer program instructions stored in the memory 2502 are executed, the processor 2501 is configured to: perform the operations performed by the establishment unit 1901, the switching unit 1902, and the processing unit 1904 in the foregoing embodiments; perform the operations performed by the generation unit 2101 and the processing unit 2103 in the foregoing embodiments; or perform the operations performed by the generation unit 2302 in the foregoing embodiments. The transceiver 2505 is configured to: perform the operations performed by the transceiver unit 1903 in the foregoing embodiments; perform the operations performed by the transceiver unit 2102 in the foregoing embodiments; or perform the operations performed by the receiving unit 2301 and the sending unit 2303 in the foregoing embodiments. The transceiver 2505 is further configured to send information to another communication apparatus other than the communication apparatus. The first device or the module in the first device may further be configured to perform the methods performed by the first device in the method embodiments in FIG. 4 to FIG. 18(b). Details are not described herein again.

In an embodiment, the communication apparatus 2500 is applicable to a second device, a module (for example, a chip or a processor) in the second device, or a logical module or software that can implement all or some functions of the second device. When the computer program instructions stored in the memory 2502 are executed, the processor 2501 is configured to: perform the operations performed by the establishment unit 2001 and the processing unit 2003 in the foregoing embodiments; perform the operations performed by the generation unit 2202 in the foregoing embodiments; or perform the operations performed by the generation unit 2401 in the foregoing embodiments. The transceiver 2505 is configured to: perform the operations performed by the transceiver unit 2002 in the foregoing embodiments; perform the operations performed by the receiving unit 2201 and the sending unit 2203 in the foregoing embodiments; or perform the operations performed by the sending unit 2402 and the receiving unit 2403 in the foregoing embodiments. The transceiver 2505 is further configured to send information to another communication apparatus other than the communication apparatus. The second device or the module in the second device may further be configured to perform the methods performed by the second device in the method embodiments in FIG. 4 to FIG. 18(b). Details are not described herein again.

The processor and the transceiver that are described in this application may be implemented on an integrated circuit (integrated circuit, IC), an analog IC, a radio frequency integrated circuit (radio frequency interface chip, RFIC), a hybrid signal IC, an application-specific integrated circuit (application-specific integrated circuit, ASIC), a printed circuit board (printed circuit board, PCB), an electronic device, or the like. The processor and the transceiver may be manufactured by using various IC technologies, for example, a complementary metal oxide semiconductor (complementary metal oxide semiconductor, CMOS), an N-type metal oxide semiconductor (nMetal-oxide-semiconductor, NMOS), a P-type metal oxide semiconductor (positive channel metal oxide semiconductor, PMOS), a bipolar junction transistor (Bipolar Junction Transistor, BJT), a bipolar CMOS (BiCMOS), silicon germanium (SiGe), and gallium arsenide (GaAs).

The apparatus described in the foregoing embodiments may be a first device or a second device. However, the scope of the apparatus described in this application is not limited thereto, and a structure of the apparatus may not be limited by that in FIG. 25. The apparatus may be an independent device, or may be a part of a larger device. For example, the apparatus may be:
(1) an independent integrated circuit IC, a chip, or a chip system or subsystem;
(2) a set of one or more ICs, where optionally, the IC set may also include a storage component configured to store data and/or instructions;
(3) an ASIC, for example, a modem (MSM);
(4) a module that can be embedded in another device;
(5) a receiver, a terminal, an intelligent terminal, a cellular phone, a wireless device, a handheld device, a mobile unit, a vehicle-mounted device, a network device, a cloud device, an artificial intelligence device, a machine device, a home device, a medical device, an industrial device, or the like; or
(6) others.

An embodiment of this application further provides a computer-readable storage medium, and the computer-readable storage medium stores a computer program. When the program is executed by the processor, a procedure related to the first device in the communication method provided in the foregoing method embodiments may be implemented.

An embodiment of this application further provides a computer-readable storage medium, and the computer-readable storage medium stores a computer program. When the program is executed by the processor, a procedure related to the second device in the communication method provided in the foregoing method embodiments may be implemented.

An embodiment of this application further provides a computer program product. When the computer program product is run on a computer or a processor, the computer or the processor is enabled to perform one or more steps in any one of the foregoing communication methods. When each of component modules of the foregoing device is implemented in a form of a software functional unit and is sold or used as an independent product, the component modules may be stored in the computer-readable storage medium.

An embodiment of this application further provides a chip system, including at least one processor and a communication interface. The communication interface and the at least one processor are interconnected through a line, and the at least one processor is configured to run a computer program or instructions, to perform some or all of the steps recorded in any one of the method embodiments corresponding to FIG. 4 to FIG. 18(b). The chip system may include a chip, or may include a chip and another discrete component.

An embodiment of this application further discloses a communication system. The system includes a first device and a second device. For specific descriptions, refer to the communication methods shown in FIG. 4 to FIG. 18(b).

It should be understood that the memory mentioned in embodiments of this application may be a volatile memory or a nonvolatile memory, or may include both a volatile memory and a nonvolatile memory. The nonvolatile memory may be a hard disk drive (hard disk drive, HDD), a solid-state drive (solid-state drive, SSD), a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM). The memory is any other medium that can carry or store expected program code in a form of an instruction or a data structure and that can be accessed by a computer, but is not limited thereto. The memory in embodiments of this application may alternatively be a circuit or any other apparatus that can implement a storage function, and is configured to store the program instructions and/or the data.

It should be further understood that, the processor mentioned in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be noted that when the processor is a general purpose processor, a DSP, an ASIC, an FPGA or another programmable logic device, a discrete gate, a transistor logic device, or a discrete hardware component, the memory (a storage module) is integrated into the processor.

It should be noted that the memory described in this specification aims to include but is not limited to these memories and any memory of another appropriate type.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that units and algorithm steps in the examples described with reference to embodiments provided in this specification may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a ROM, a RAM, a magnetic disk, or an optical disc.

A sequence of the steps of the method in embodiments of this application may be adjusted, combined, or removed based on an actual requirement.

The modules/units in the apparatus in embodiments of this application may be combined, divided, and deleted based on an actual requirement.

In conclusion, the foregoing embodiments are merely intended for describing the technical solutions of this application, but not for limiting this application. Although this application is described in detail with reference to the foregoing embodiments, a person of ordinary skill in the art should understand that they may still make modifications to the technical solutions described in the foregoing embodiments or make equivalent replacements to some technical features thereof, without departing from the scope of the technical solutions of embodiments of this application.

## Claims

1. A communication method, comprising:
establishing, by a first device, a wireless communication link with a second device, wherein the first device operates in a first operating mode; and
switching, by the first device, from the first operating mode to a second operating mode, and communicating with the second device.

2. The method according to claim 1, wherein when a first condition is met, the first device switches from the first operating mode to the second operating mode, and the first condition comprises one or more of the following:
the first device changes from a listening state to a data transmission state; or
an amount of data to be transmitted between the first device and the second device changes from less than or equal to a first threshold to greater than the first threshold.

3. The method according to claim 1 or 2, wherein the first operating mode corresponds to a first bandwidth, and the second operating mode corresponds to a second bandwidth.

4. The method according to claim 3, wherein the second device operates in a third operating mode, and the third operating mode corresponds to a third bandwidth.

5. The method according to claim 4, wherein the first bandwidth is less than or equal to the third bandwidth, and the second bandwidth is less than or equal to the third bandwidth.

6. The method according to any one of claims 1 to 5, wherein the switching, by the first device, from the first operating mode to a second operating mode comprises:
generating, by the first device, a first frame, wherein the first frame comprises a first field, and the first field comprises an operating mode parameter;
sending, by the first device, the first frame to the second device; and
switching, by the first device, from the first operating mode to the second operating mode.

7. The method according to claim 6, wherein the first field comprises an operating mode switch duration indication.

8. The method according to claim 7, wherein the first field further comprises a signal bandwidth.

9. The method according to any one of claims 6 to 8, wherein the method further comprises:
receiving, by the first device, a second frame from the second device, wherein the second frame comprises a second field, the second frame is for initiating operating mode negotiation, and the second field is for recommending an operating mode parameter.

10. The method according to claim 9, wherein the second field comprises an operating mode recommendation indication and/or an operating mode negotiate indication.

11. The method according to any one of claims 6 to 10, wherein the method further comprises:
sending, by the first device, a third frame to the second device, wherein the third frame indicates that operating mode switching is completed.

12. A communication method, comprising:
establishing, by a second device, a wireless communication link with a first device, wherein the first device operates in a first operating mode; and
communicating, by the second device, with the first device based on a second operating mode.

13. The method according to claim 12, wherein when a first condition is met, the second device communicates with the first device based on the second operating mode, and the first condition comprises one or more of the following:
the first device changes from a listening state to a data transmission state; or
an amount of data to be transmitted between the first device and the second device changes from less than or equal to a first threshold to greater than the first threshold.

14. The method according to claim 12 or 13, wherein the first operating mode corresponds to a first bandwidth, and the second operating mode corresponds to a second bandwidth.

15. The method according to claim 14, wherein the second device operates in a third operating mode, and the third operating mode corresponds to a third bandwidth.

16. The method according to claim 15, wherein the first bandwidth is less than or equal to the third bandwidth, and the second bandwidth is less than or equal to the third bandwidth.

17. The method according to any one of claims 12 to 16, wherein the method further comprises:
receiving, by the second device, a first frame from the first device, wherein the first frame comprises a first field, and the first field comprises an operating mode parameter.

18. The method according to claim 17, wherein the first field comprises an operating mode switch duration indication.

19. The method according to claim 18, wherein the first field further comprises a signal bandwidth.

20. The method according to any one of claims 17 to 19, wherein the method further comprises:
sending, by the second device, a second frame to the first device, wherein the second frame comprises a second field, the second frame is for initiating operating mode negotiation, and the second field is for recommending an operating mode parameter.

21. The method according to claim 20, wherein the second field comprises an operating mode recommendation indication and/or an operating mode negotiate indication.

22. The method according to any one of claims 17 to 21, wherein the method further comprises:
receiving, by the second device, a third frame from the first device, wherein the third frame indicates that operating mode switching is completed.

23. A communication method, wherein the communication method comprises the method according to any one of claims 1 to 11 and the method according to any one of claims 12 to 22.

24. A communication apparatus, comprising:
an establishment unit, configured to establish a wireless communication link with a second device, wherein a first device operates in a first operating mode;
a switching unit, configured to switch from the first operating mode to a second operating mode; and
a transceiver unit, configured to communicate with the second device.

25. The apparatus according to claim 24, wherein when a first condition is met, the switching unit switches from the first operating mode to the second operating mode, and the first condition comprises one or more of the following: the first device changes from a listening state to a data transmission state; or an amount of data to be transmitted between the first device and the second device changes from less than or equal to a first threshold to greater than the first threshold.

26. The apparatus according to claim 24 or 25, wherein the first operating mode corresponds to a first bandwidth, and the second operating mode corresponds to a second bandwidth.

27. The apparatus according to claim 26, wherein the second device operates in a third operating mode, and the third operating mode corresponds to a third bandwidth.

28. The apparatus according to claim 27, wherein the first bandwidth is less than or equal to the third bandwidth, and the second bandwidth is less than or equal to the third bandwidth.

29. The apparatus according to any one of claims 24 to 28, wherein the switching unit switches from the first operating mode to the second operating mode, and is specifically configured to: generate a first frame, wherein the first frame comprises a first field, and the first field comprises an operating mode parameter; send the first frame to the second device; and switch from the first operating mode to the second operating mode.

30. The apparatus according to claim 29, wherein the first field comprises an operating mode switch duration indication.

31. The apparatus according to claim 30, wherein the first field further comprises a signal bandwidth.

32. The apparatus according to any one of claims 29 to 31, wherein the transceiver unit is further configured to receive a second frame from the second device, wherein the second frame comprises a second field, the second frame is for initiating operating mode negotiation, and the second field is for recommending an operating mode parameter.

33. The apparatus according to claim 32, wherein the second field comprises an operating mode recommendation indication and/or an operating mode negotiate indication.

34. The apparatus according to any one of claims 29 to 33, wherein the transceiver unit is further configured to send a third frame to the second device, wherein the third frame indicates that operating mode switching is completed.

35. A communication apparatus, comprising:
an establishment unit, configured to establish a wireless communication link with a first device, wherein the first device operates in a first operating mode; and
a transceiver unit, configured to communicate with the first device based on a second operating mode.

36. The apparatus according to claim 35, wherein when a first condition is met, the transceiver unit communicates with the first device based on the second operating mode, and the first condition comprises one or more of the following: the first device changes from a listening state to a data transmission state; or an amount of data to be transmitted between the first device and a second device changes from less than or equal to a first threshold to greater than the first threshold.

37. The apparatus according to claim 35 or 36, wherein the first operating mode corresponds to a first bandwidth, and the second operating mode corresponds to a second bandwidth.

38. The apparatus according to claim 37, wherein the second device operates in a third operating mode, and the third operating mode corresponds to a third bandwidth.

39. The apparatus according to claim 38, wherein the first bandwidth is less than or equal to the third bandwidth, and the second bandwidth is less than or equal to the third bandwidth.

40. The apparatus according to any one of claims 35 to 39, wherein the transceiver unit is further configured to receive a first frame from the first device, wherein the first frame comprises a first field, and the first field comprises an operating mode parameter.

41. The apparatus according to claim 40, wherein the first field comprises an operating mode switch duration indication.

42. The apparatus according to claim 41, wherein the first field further comprises a signal bandwidth.

43. The apparatus according to any one of claims 40 to 42, wherein the transceiver unit is further configured to send a second frame to the first device, wherein the second frame comprises a second field, the second frame is for initiating operating mode negotiation, and the second field is for recommending an operating mode parameter.

44. The apparatus according to claim 43, wherein the second field comprises an operating mode recommendation indication and/or an operating mode negotiate indication.

45. The apparatus according to any one of claims 40 to 44, wherein the transceiver unit is further configured to receive a third frame from the first device, wherein the third frame indicates that operating mode switching is completed.

46. A communication apparatus, comprising a processor, a memory, an input interface, and an output interface, wherein the input interface is configured to receive information from a communication apparatus other than the communication apparatus, the output interface is configured to output information to a communication apparatus other than the communication apparatus, and when a stored computer program stored in the memory is invoked by the processor, the method according to any one of claims 1 to 11 is implemented, or the method according to any one of claims 12 to 22 is implemented.

47. A computer-readable storage medium, wherein the computer-readable storage medium stores a computer program or computer instructions, and when the computer program or the computer instructions are executed by a processor, a first device is supported in implementing the method according to any one of claims 1 to 11, or a second device is supported in implementing the method according to any one of claims 12 to 22.

48. A computer program product comprising program instructions, wherein when the program instructions are run on a computer, the method according to any one of claims 1 to 11 is implemented, or the method according to any one of claims 12 to 22 is implemented.

49. A chip system, comprising at least one processor, a memory, and an interface circuit, wherein the memory, the interface circuit, and the at least one processor are interconnected through a line, the at least one memory stores instructions, and when the instructions are executed by the processor, a first device is supported in implementing the method according to any one of claims 1 to 11, or a second device is supported in implementing the method according to any one of claims 12 to 22.

50. A communication system, comprising a first device and a second device, wherein the first device is configured to perform the method according to any one of claims 1 to 11, and the second device is configured to perform the method according to any one of claims 12 to 22.
